# EUROPEAN PATENT APPLICATION

(11) **EP 4 797 217 A1**
(43) Date of publication of application: **26.08.2026**
(21) Application number: 26159980.7
(22) Date of filing: 23.02.2026
(51) Int. Cl.: G06V 10/44, G06T 7/00

(54) **VARIABLE INPUT VISION TRANSFORMER FRAMEWORK FOR 3D MEDICAL IMAGE SEGMENTATION**

(30) Priority: 24.02.2025 US 202563762166 P; 11.06.2025 US 202519234717
(71) Applicant: Siemens Healthineers AG, 91301 Forchheim (DE); Friedrich-Alexander-Universität Erlangen-Nürnberg, in Vertretung des Freistaates Bayern, 91058 Erlangen (DE)
(72) Inventor: ZHAO, Gengyan, Princeton, NJ 08540-6632 (US); DAS, Badhan Kumar, 91052 Erlangen (DE); SINGH, Ajay, 91054 Erlangen (DE); GEORGESCU, Bogdan, Princeton, NJ 08540-6632 (US); GIBSON, Eli, Princeton, NJ 08540-6632 (US); COMANICIU, Dorin, Princeton, NJ 08540-6632 (US)
(74) Representative: HKW Intellectual Property PartG mbB

(57) **Abstract**

Systems and methods for performing a medical imaging analysis task are provided. 1) One or more input medical images each in a domain and 2) a domain code for each of the one or more input medical images identifying its domain are received. Each particular input medical image of the one or more input medical images is downsampled using a dynamic convolutional layer based on the domain code for the particular input medical image. A first set of features is extracted from each particular downsampled input medical image of the one or more downsampled input medical images using the dynamic convolutional layer based on the domain code for the particular downsampled input medical image. The first set of features is encoded into a second set of features using a machine learning based encoder. A medical imaging analysis task is performed based on the second set of features using a machine learning based decoder. Results of the medical imaging analysis task are output.

## Description

### CROSS-REFERENCE TO RELATED APPLICATIONS

This application claims the benefit of U.S. Provisional Application No. 63/762,166, filed February 24, 2025, the disclosure of which is incorporated herein by reference in its entirety.

### TECHNICAL FIELD

The present invention relates generally to AI/ML (artificial intelligence/machine learning) based medical imaging analysis, and in particular to a variable input vision transformer framework for 3D medical image segmentation.

### BACKGROUND

Recently, the advancement of foundation models has garnered significant attention, with notable progress observed in various applications. For instance, LLM (large language model) advancement has significantly improved question answering tasks, while diffusion models have excelled in image synthesis. However, the inherent complexity and heterogeneity of medical imaging data present significant challenges in designing a foundation model for medical imaging analysis.

Conventional foundation models typically accept a single image as input. However, medical diagnoses often necessitate the utilization of multiple input medical images, such as multiple MR (magnetic resonance) images with different modalities and/or contrasts. Moreover, the number of input images and the corresponding contrasts acquired may vary across different diagnostic tasks and clinical sites. Conventional foundation models are typically unable to handle varying number of input images.

### BRIEF SUMMARY OF THE INVENTION

The invention is defined by the attached set of claims. Further details of the disclosed method, devices and system are described below, which are helpful for understanding the claimed invention.

In accordance with one or more embodiments, systems and methods for performing a medical imaging analysis task are provided. 1) One or more input medical images each in a domain and 2) a domain code for each of the one or more input medical images identifying its domain are received. Each particular input medical image of the one or more input medical images is downsampled using a dynamic convolutional layer based on the domain code for the particular input medical image. A first set of features is extracted from each particular downsampled input medical image of the one or more downsampled input medical images using the dynamic convolutional layer based on the domain code for the particular downsampled input medical image. The first set of features is encoded into a second set of features using a machine learning based encoder. A medical imaging analysis task is performed based on the second set of features using a machine learning based decoder. Results of the medical imaging analysis task are output.

In accordance with one embodiment, for each respective one of the domain codes, one or more weights are determined based on the respective domain code. One or more parameters of the dynamic convolutional layer are updated based on the one or more weights. The particular input medical image is downsampled using the dynamic convolutional layer with the one or more updated parameters.

In accordance with one embodiment, the machine learning based encoder comprises a plurality of encoding levels. Each of the plurality of encoding levels comprises a self-attention layer for extracting global features and a further dynamic convolutional layer for extracting local features.

In accordance with one embodiment, features are extracted at each of the plurality of encoding levels. The extracted features at the plurality of encoding levels form the second set of features.

In accordance with one embodiment, for each respective encoding level of the plurality of encoding levels, the second set of features for the respective encoding level is split into domain-specific sequences, each of the domain-specific sequences are decoded using a domain-specific self-attention layer to generate decoded features, for each particular position of a plurality of positions in the one or more input medical images, a mean of the decoded features corresponding to the particular position is determined, and the mean of the decoded features are aggregated. The aggregated mean of the decoded features for the plurality of encoding levels are combined using the machine learning based decoder.

In accordance with one embodiment, the dynamic convolutional layer and the machine learning based encoder are trained by: pretraining the dynamic convolutional layer and the machine learning based encoder for performing an image reconstruction task; and fine-tuning the pretrained dynamic convolutional layer and the pretrained machine learning based encoder for performing the medical imaging analysis task.

In one embodiment, 1) One or more masked training medical images each in a domain and 2) a domain code for each of the one or more masked training medical images identifying its domain are received. The one or more masked training medical images are generated by masking one or more training medical images. Each particular masked training medical image of the one or more masked training medical images is downsampled using the dynamic convolutional layer based on the domain code for the particular masked training medical image. A third set of features is extracted from each particular downsampled masked training medical image of the one or more downsampled masked training medical images using the dynamic convolutional layer based on the domain code for the particular downsampled masked training medical image. The third set of features is encoded into a fourth set of features using a machine learning based encoder. Tokens representing the masked patches of the one or more training medical images are inserted into the fourth set of features. The one or more training medical images are reconstructed based on the fourth set of features with the inserted tokens using another machine learning based decoder. The dynamic convolutional layer and the machine learning based encoder are trained based on the one or more training medical images and the one or more reconstructed training medical images. The trained dynamic convolutional layer and the trained machine learning based encoder are output.

In accordance with one embodiment, each particular training medical image of the one or more training medical images is downsampled using the trained dynamic convolutional layer based on the domain code for the particular training medical image. A fifth set of features is extracted from each particular downsampled training medical image of the one or more downsampled training medical images using the trained dynamic convolutional layer based on the domain code for the particular downsampled masked training medical image. The fifth set of features is encoded into a sixth set of features using the trained machine learning based encoder. A medical imaging analysis task is performed based on the sixth set of features using the machine learning based decoder. The trained dynamic convolutional layer, the trained machine learning based encoder, and the machine learning based decoder are fine-tuned based on results of the medical imaging analysis task and ground truth results of the medical imaging analysis task. The fine-tuned dynamic convolutional layer, the fine-tuned machine learning based encoder, and the fine-tuned machine learning based decoder are output.

In accordance with one embodiment, the one or more input medical images comprises an MRI (magnetic resonance imaging) sequence of a brain of a patient.

These and other advantages of the invention will be apparent to those of ordinary skill in the art by reference to the following detailed description and the accompanying drawings.

### BRIEF DESCRIPTION OF THE DRAWINGS

Figure 1 shows a method for performing a medical imaging analysis task using a variable input vision transformer architecture, in accordance with one or more embodiments;
Figure 2 shows a workflow for performing a medical imaging analysis task using a variable input vision transformer architecture, in accordance with one or more embodiments;
Figure 3 shows an exemplary architecture of a dynamic transformer-convolution encoder, in accordance with one or more embodiments;
Figure 4 shows a method for pretraining a variable input vision transformer architecture for performing a medical imaging analysis task, in accordance with one or more embodiments;
Figure 5 shows a method for fine-tuning a pretrained variable input vision transformer architecture for performing a medical imaging analysis task, in accordance with one or more embodiments;
Figure 6 shows a workflow for training a variable input vision transformer architecture for performing a medical imaging analysis task, in accordance with one or more embodiments;
Figure 7 shows a table comparing the variable input vision transformer method in accordance with embodiments described herein with conventional approaches;
Figure 8 shows a table comparing the performance of the variable input vision transformer method in accordance with embodiments described herein for different input contrast set situations between pretrain and finetune;
Figure 9 shows a table comparing the performance of the variable input vision transformer method in accordance with embodiments described herein with different model components and masking ratios;
Figure 10 shows an exemplary artificial neural network that may be used to implement one or more embodiments;
Figure 11 shows a convolutional neural network that may be used to implement one or more embodiments;
Figure 12 shows a data flow diagram according to an embodiment for using a generative adversarial network, in accordance with one or more embodiments;
Figure 13 shows a schematic structure of a recurrent machine learning model that may be used to implement one or more embodiments; and
Figure 14 shows a high-level block diagram of a computer that may be used to implement one or more embodiments.

### DETAILED DESCRIPTION

The present invention generally relates to a variable input vision transformer framework for 3D medical image segmentation. Embodiments of the present invention are described herein to give a visual understanding of such methods and systems. A digital image is often composed of digital representations of one or more objects (or shapes). The digital representation of an object is often described herein in terms of identifying and manipulating the objects. Such manipulations are virtual manipulations accomplished in the memory or other circuitry/hardware of a computer system. Accordingly, it is to be understood that embodiments of the present invention may be performed within a computer system using data stored within the computer system. Further, reference herein to pixels of an image may refer equally to voxels of an image and vice versa.

Embodiments described herein provide for a universal framework for a variable input vision transformer architecture for medical imaging analysis. The variable input vision transformer architecture accommodates a variable number of input medical images, e.g., across different subjects, imaging studies, domains, etc. The variable input vision transformer architecture improves on conventional machine learning based architectures for medical imaging analysis by effectively and efficiently enabling a variable number of input medical images by the addition 1) a dynamic convolutional layer for dynamic downsampling, 2) a hybrid transformer encoder having one or more encoding levels each comprising a self-attention layer and a dynamic convolutional layer, and 3) attention and mean layers for aggregating the encoded features generated by the hybrid transformer encoder at each of the one or more encoding levels for decoding by a machine learning based decoder network. The variable input vision transformer architecture is trained according to a self-supervised pretraining stage followed by a finetuning stage for a medical imaging analysis task. Advantageously, the variable input vision transformer architecture maximizes data utilization and improves adaptability to various downstream medical imaging analysis tasks, while also enabling the foundation models to handle missing imaging modalities or contrasts, making it more robust to variations in clinical imaging protocols.

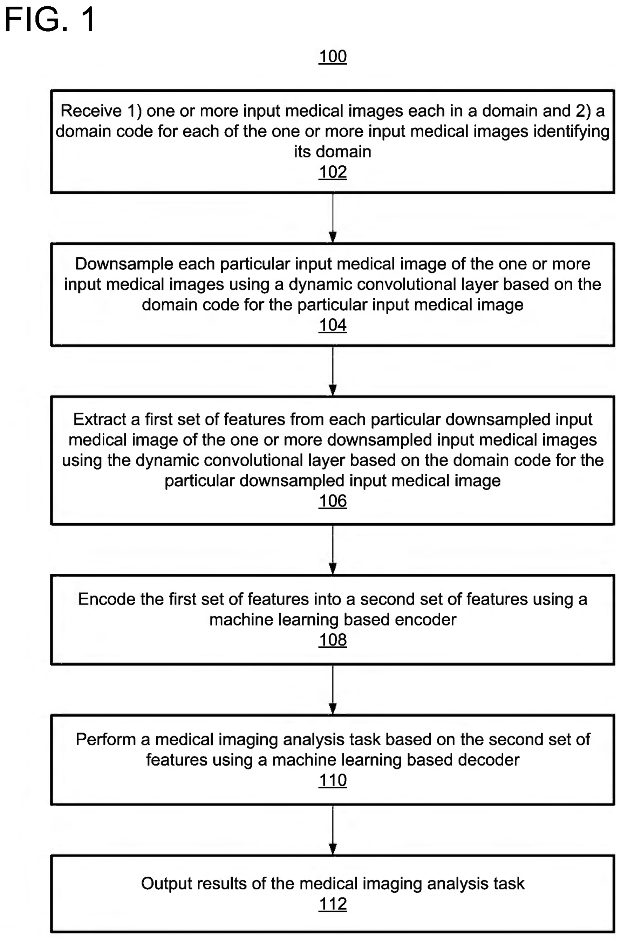

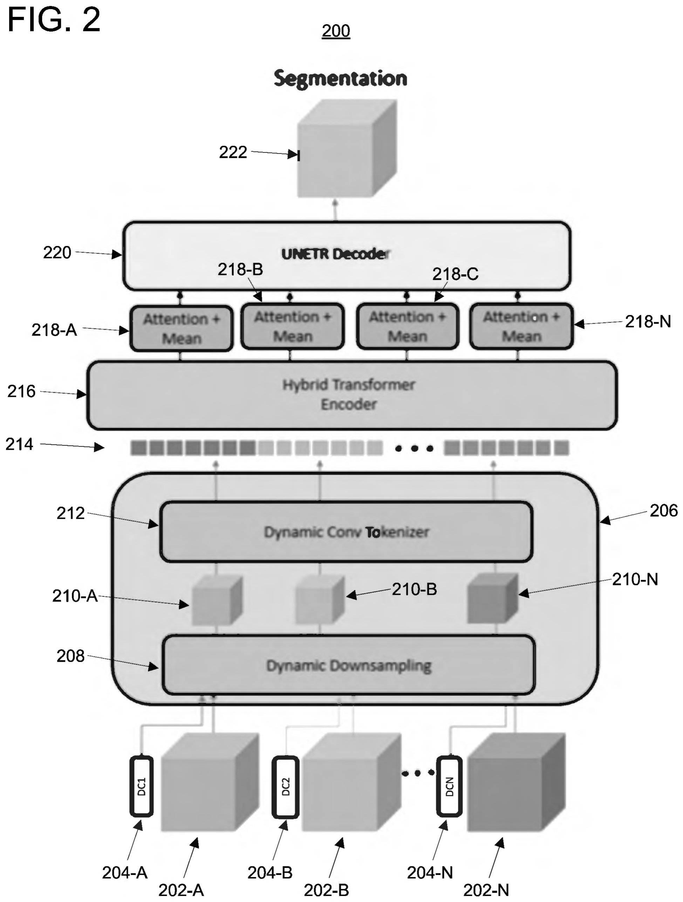

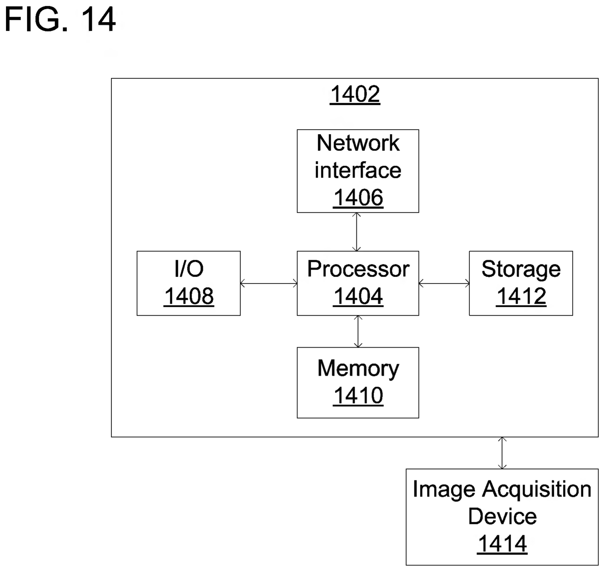

Figure 1 shows a method 100 for performing a medical imaging analysis task using a variable input vision transformer architecture, in accordance with one or more embodiments. The steps and sub-steps of method 100 may be performed by one or more suitable computing devices, such as, e.g., computer 1402 of Figure 14. Figure 2 shows a workflow 200 for performing a medical imaging analysis task using a variable input vision transformer architecture, in accordance with one or more embodiments. Figure 1 and Figure 2 will be described together.

At step 102 of Figure 1, 1) one or more input medical images each in a domain and 2) a domain code for each of the one or more input medical images identifying its domain are received. As shown in workflow 200 of Figure 2, the one or more input medical images may be input medical images 202-A, 202-B, ..., 202-N (collectively referred to as input medical images 202) respectively in domains 1, 2, ..., N and the domain codes may be domain codes DC1 204-A, DC2 204-B, ..., DCN 204-N (collectively referred to as domain codes 204) respectively identifying the domain of input medical images 202-A, 202-B, ..., 202-N.

In one embodiment, the one or more input medical images depict the brain of a patient. However, the one or more input medical images may depict any other suitable anatomical object of interest of a patient, such as, e.g., other organs, tumors or other abnormalities, vessels, bones, etc. The one or more input medical images may be of any suitable domain. As used herein, a domain of a medical image refers to the modality of the medical image as well as the protocol used for obtaining the medical image in that modality. The modality of the one or more input medical images may include, for example, MRI (magnetic resonance imaging), CT (computed tomography), US (ultrasound), x-ray, SPECT (single-photon emission computed tomography), PET (positron emission tomography), or any other medical imaging modality or combinations of medical imaging modalities. The protocol used for obtaining the one or more input medical images may include, for example, acquisition sequences or techniques for acquiring a medical image, such as, e.g., T1-weighted, T2-weighted, proton density-weighted MRI images, contrast and non-contrast images, CT images captured with low kV (kilovoltage) and high kV, or low and high resolution medical images. Accordingly, the domains may be completely different medical imaging modalities or different image protocols within the same overall imaging modality. The one or more input medical images may be represented in the image space (e.g., as pixel or voxel values in spatial coordinates) or the latent space (e.g., as a lower-dimensional, compressed representation of the one or more medical images represented as a feature vector). The one or more input medical images in the image space may be 2D (two dimensional) images and/or 3D (three dimensional) volumes.

The domain codes respectively identify the domain of the one or more input medical images. The domain codes may be represented in any suitable form. In one embodiment, the domain codes are vectors. Each combination of values of the domain codes are associated with a domain. The association between the domain codes and the domains may be predefined by a user or learned during training. Other approaches for encoding the identification of a domain in a domain code are also contemplated.

The one or more input medical images and/or the domain codes may be received, for example, by directly receiving the one or more input medical images from an image acquisition device (e.g., image acquisition device 1414 of Figure 14) as the one or more input medical images are acquired, by loading the one or more input medical images and/or the domain codes from a storage or memory of a computer system (e.g., storage 1412 or memory 1410 of computer 1402 of Figure 14), or by receiving the one or more input medical images and/or the domain codes from a remote computer system (e.g., computer 1402 of Figure 14). Such a computer system or remote computer system may comprise one or more patient databases, such as, e.g. , an EHR (electronic health record), EMR (electronic medical record), PHR (personal health record), HIS (health information system), RIS (radiology information system), PACS (picture archiving and communication system), LIMS (laboratory information management system), or any other suitable database or system.

At step 104 of Figure 1, each particular input medical image of the one or more input medical images is downsampled using a dynamic convolutional layer based on the domain code for the particular input medical image. In one example, as shown in workflow 200 of Figure 2, each input medical image 202-A, 202-B, ..., 202-N is respectively downsampled by dynamic downsampling 208 of dynamic patch tokenizer 206 based on domain codes 204-A, 204-B, ..., 204-N to generate downsampled input medical images 210-A, 210-B, ..., 210-N (collectively referred to as downsampled input medical images 210).

The dynamic convolutional layer comprises convolutional filters (or kernels) that are not fixed but adapt dynamically by updating one or more parameters based on the domain codes. Examples of a dynamic convolutional layer include dynamic filter networks and attention mechanisms. Each particular input medical image of the one or more input medical images is downsampled by 1) for each respective one of the domain codes, determining one or more weights based on the respective domain code, 2) updating one or more parameters of the dynamic convolutional layer based on the one or more weights, and 3) downsampling the particular input medical image using the dynamic convolutional layer with the one or more updated parameters.

In one embodiment, the one or more weights comprise a weight parameter W and a bias parameter *B.* The weight parameter W and a bias parameter *B* may be determined based on the respective domain code by mapping or projecting the respective domain code weight vector *w_{conv}* and a bias vector *b_{conv}* through a set of parameters of a linear projector optimized during a training process. The weight parameter W may be updated, for example, by calculating the dot product of the weight parameter W and the weight vector *w_{conv}* (i.e., *W_{updated} = W · w_{conv}*) and the bias parameter *B* may be updated by calculating the dot product of the bias parameter *B* and the bias vector *b_{conv}*(i.e., *B_{updated} = B · b_{conv}*). Thus, the domain codes control the behavior of the dynamic convolutional layer. The one or more parameters of the dynamic convolutional layer may be updated according to any other suitable approach.

For each particular input medical image of the i-th domain ${X}_{i} ∈ {ℝ}^{1 \times H \times W \times D}$, where H, W, and D are the height, width, and depth, respectively, of the particular input medical image, the dynamic convolutional layer with the one or more updated parameters receives as input the particular input medical image and generates as output *Yᵢ = Conv*(*X, W_{updated}, B_{updated}*), where ${Y}_{i} ∈ {ℝ}^{C \times \frac{H}{S} \times \frac{W}{S} \times \frac{D}{S}}$ represents the output of the dynamic convolutional layer, C denotes the number of the output channel of the dynamic convolutional layer, and S denotes the stride of the dynamic convolutional layer. In one embodiment, the dynamic convolutional layer is configured with a 7x7x7 kernel size and a stride of 2 to downsample the input medical images over a large receptive field. The operations of the dynamic convolutional layer transform each input medical image of shape ${ℝ}^{1 \times \frac{H}{S} \times \frac{W}{S} \times \frac{D}{S}}$ into a higher dimensional representation ${ℝ}^{C \times \frac{H}{S} \times \frac{W}{S} \times \frac{D}{S}}$. The one or more downsampled input medical images represent low-level features (e.g., edges, boundaries, contrast changes, etc.) of the one or more input medical images.

At step 106 of Figure 1, a first set of features is extracted from each particular downsampled input medical image of the one or more downsampled input medical images using the dynamic convolutional layer based on the domain code for the particular downsampled input medical image. In one example, as shown in workflow 200 of Figure 2, features are extracted from downsampled input medical images 210-A, 210-B, ..., 210-N using dynamic convolutional tokenizer 212 of dynamic patch tokenizer 206. The features extracted from downsampled input medical images 210 are combined (e.g., concatenated) into a sequence of features 214.

In one embodiment, the first set of features is extracted from each particular downsampled input medical image of the one or more downsampled input medical images using the dynamic convolutional layer with the one or more updated parameters. The one or more updated parameters (e.g., weight vector *w_{conv}* and a bias vector *b_{conv}*) may be updated based on the domain code for the particular downsampled input medical image, as described at step 104 of Figure 1. The dynamic convolutional layer (with the one or more updated parameters) receives as input patches extracted from the one or more downsampled input medical images, maps each patch to a token of features, and generates as output the tokens representing the first set of features. The features are a lower-dimensional, compressed representation of the patches represented as a feature vector. The tokens are flattened into 1D (one dimensional) tokens for each domain. The dynamic convolutional layer may be the same as applied at step 104 of Figure 1, however configured with a different kernel size and stride. For example, in one embodiment, the dynamic convolutional layer for extracting the first set of features may be configured using the patch size as the kernel size and the stride size.

At step 108 of Figure 1, the first set of features is encoded into a second set of features using a machine learning based encoder. In one example, as shown in workflow 200 of Figure 2, features 214 is encoded into the second set of features (not shown) by hybrid transformer encoder 216.

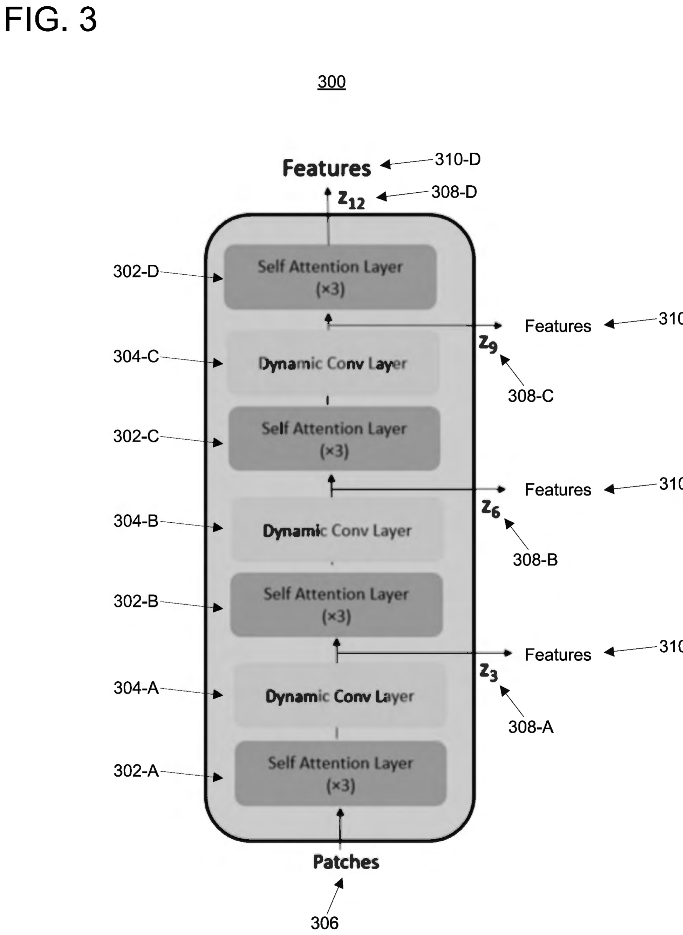

The tokens of the first set of features are combined (e.g., concatenated) into a single sequence and input into the machine learning based encoder. The tokens of the first set of features are encoded with positional embeddings (e.g., sinusoidal or learnable) based on the position of their patch within the one or more input medical images. Thus, tokens of different domains but the same relative patch location will have the same positional embedding. The position embeddings help preserve spatial relationships of the tokens. In addition, modality embeddings are generated from the domain codes using another linear projector and the tokens of the first set of features are encoded with modality embeddings. The machine learning based encoder receives as input the first set of features (represented as a sequence of tokens encoded with the position embeddings and the modality embeddings) and generates as output the second set of features. In one embodiment, the machine learning based encoder is a dynamic transformer-convolution encoder for learning global and local relationships between the patches. Figure 3 shows an exemplary architecture of a dynamic transformer-convolution encoder, as described in detailed below. However, the machine learning based encoder may be implemented in any other suitable form.

Figure 3 shows an exemplary architecture of a dynamic transformer-convolution encoder 300, in accordance with one or more embodiments. In one example, dynamic transformer-convolution encoder 300 may be the machine learning based encoder utilized at step 108 of Figure 1 or the hybrid transformer encoder 216 of Figure 2. Dynamic transformer-convolution encoder 300 comprises a plurality of encoding levels Z3 308-A, Z6 308-B, Z9 308-C and Z12 308-D (collectively referred to as levels 308) each comprising a respective self-attention layer 302-A, 302-B, 302-C, and 302-D (collectively referred to as self-attention layer 302) and a respective dynamic convolutional layer 304-A, 304-B, and 304-C (collectively referred to as dynamic convolutional layer 304), with the exception of the last self-attention layer 302-D which comprises self-attention layer 302-D without a dynamic convolutional layer. Self-attention layers 302 applies self-attention across all tokens from all available domains to extract global features and learn inter-domain relationships. Dynamic convolutional layers 304 enable flexible local feature extraction from variable domains and takes the spatial relationships in the 3D space into consideration. Dynamic convolutional layers 304 may be the same as the dynamic convolutional layer utilized at step 104 of Figure 1 (but configured differently). Dynamic transformer-convolution encoder 300 extracts features 310-A, 310-B, 310-C, and 310-D (collectively referred to as features 310) at each respective encoding level 308-A, Z6 308-B, Z9 308-C and Z12 308-D. Features 310 extracted at each of the encoding levels 308 represent the second set of features at step 108 of Figure 1.

The design of dynamic transformer-convolution encoder 300 provides the following advantages. 1) Dynamic transformer-convolution encoder 300 takes advantage of the transformer's ability to process variable lengths of an input sequence of tokens to handle a variable number of input medical images, while learning the relationship between patches of different domains via self-attention layers 302. 2) By alternatively utilizing transformers (self-attention layers 302) and dynamic convolutional layers 304, dynamic transformer-convolution encoder 300 can capture both local and global features. 3) After several levels 308, the 1D token sequence of each domain will be reshaped to a 4D (four dimensional) feature map ( ${ℝ}^{T \times \frac{H}{P} \times \frac{W}{P} \times \frac{D}{P}}$ where T is the embedding dimension of the transformer and P is the patch size) and processed through dynamic convolutional layers 304 where the spatial relationship of features in the spatial 3D space are reinforced.

Referring back to Figure 1, at step 110, a medical imaging analysis task is performed based on the second set of features using a machine learning based decoder. In one embodiment, the medical imaging analysis task is segmentation of the anatomical object of interest from the one or more input medical images. However, the medical imaging analysis task may additionally or alternatively comprise any other suitable medical imaging analysis task, such as, e.g., detection, classification, quantification, synthetic image generation, etc.

To perform the medical imaging analysis task, the tokens of the second set of features are combined (e.g., concatenated) into a single sequence of features for each of the plurality of encoding levels (of the machine learning based encoder) and the sequences of features are decoded by a machine learning based decoder. In one embodiment, the machine learning based decoder is a domain fusion decoder comprises attention and mean layers and a decoder. The sequence of the second set of features is decoded in two decoding steps.

The first decoding step is performed for the sequence of features for each respective encoding level of the plurality of encoding levels of the machine learning based encoder using a self-attention layer and a mean layer for each domain. In one example, as shown in workflow 200 of Figure 2, the first decoding step is performed by attention and mean layers 218-A, 218-B, 218-C, ..., 218-N (collectively referred to as attention and mean layers 218). In the first decoding step, the sequence of features for the respective encoding level is split into domain-specific sequences. The domain-specific sequence for each domain is decoded by a domain-specific self-attention layer for that domain. For each particular position of a plurality of positions in the one or more input medical images, the mean of the decoded features corresponding to the particular position is determined by the mean layer. For example, for a position (1,1,1), the mean of the decoded features corresponding to position (1,1,1) at each of the one or more input medical images is calculated. The means of the decoded features are aggregated to provide for aggregated mean decoded features for all positions over the one or more input medical images for the respective encoding level. Formally, for each encoding level *zₖ*(*k* ∈ {3,6,9,12}), the aggregated decoded token is calculated as: ${F}_{j}^{{Z}_{k}} = \frac{1}{N} {\sum }_{i = 1}^{N} {SA}_{j}^{{Z}_{k}} \left({X}_{i , j}^{{Z}_{k}}\right)$ where ${X}_{i , j}^{{Z}_{k}}$ is the j-th (position) encoded feature for domain i at encoding level *Zₖ,* ${SA}_{j}^{{Z}_{k}} \left(⋅\right)$ denotes the self-attention layer for domain i at encoding level Zₖ, and N is the number of available domains.

During the second decoding step, for each respective encoding level *Zₖ* of the plurality of levels, the aggregated mean decoded features ${F}_{j}^{{Z}_{k}}$ for all positions (*j* = 0,1,... *, J*) for the respective encoding level are reshaped to a 4D (four dimensional) tensor feature map ${ℝ}^{T \times \frac{H}{P} \times \frac{W}{P} \times \frac{D}{P}}$ and the 4D tensor feature maps for all encoding levels are further decoded and combined using a machine learning based decoder. In one embodiment, the machine learning based decoder is a multi-level CNN (convolutional neural network) decoder, such as, e.g., UNETR (UNet Transformer). For example, as shown in workflow 200 of Figure 2, the machine learning based decoder is UNETR decoder 220 generating segmentation results 222. However, the machine learning based decoder may be of any other suitable machine learning based architecture.

The two-stage decoding improves the performance of the medical imaging analysis task by using a domain-specific self-attention layer to decode the encoded features at every level for each domain before combining them and subsequently applying a machine learning based decoder to further decode and up-sample the feature map to the original input resolution to generate results of the medical imaging analysis task.

At step 112 of Figure 1, results of the medical imaging analysis task are output. For example, the results of the medical imaging analysis task can be output by displaying the results on a display device of a computer system (e.g., I/O 1408 of computer 1402 of Figure 14), storing the results on a memory or storage of a computer system (e.g., memory 1410 or storage 1412 of computer 1402 of Figure 14), or by transmitting the results to a remote computer system (e.g., computer 1402 of Figure 14).

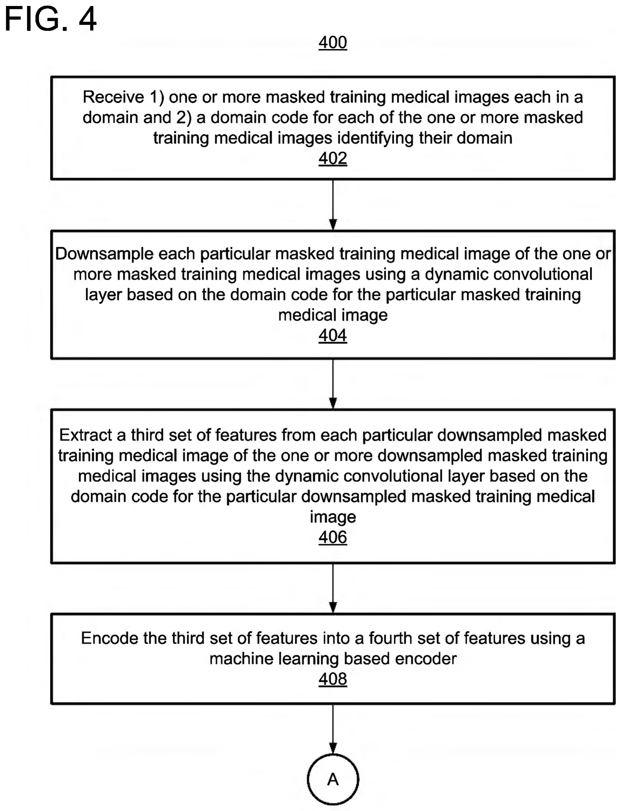

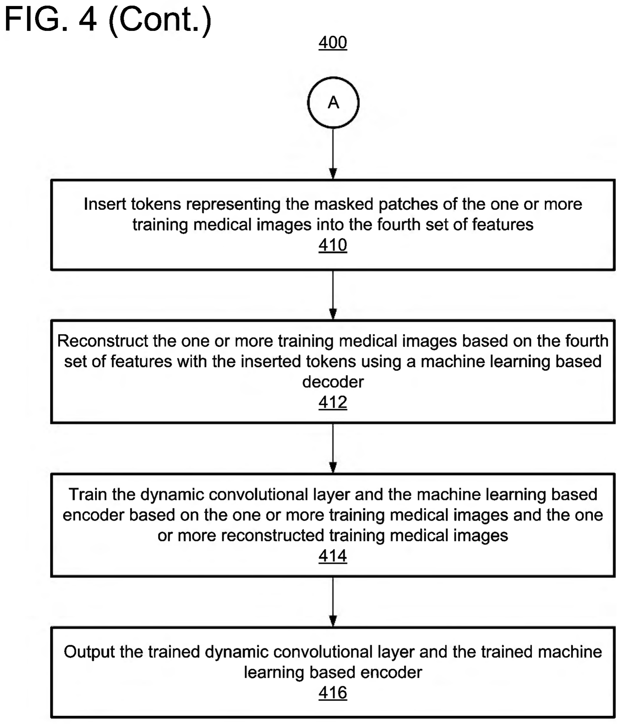

The variable input vision transformer architecture (comprising, for example, dynamic patch tokenizer 206, hybrid transformer encoder 216, and UNETR decoder 220 of Figure 2) are trained during a prior offline or training stage, e.g., as described with respect to Figures 4-6. Once trained, the variable input vision transformer architecture is applied during an online or inference stage, e.g., to perform method 100 of Figure 1 and/or workflow 200 of Figure 2.

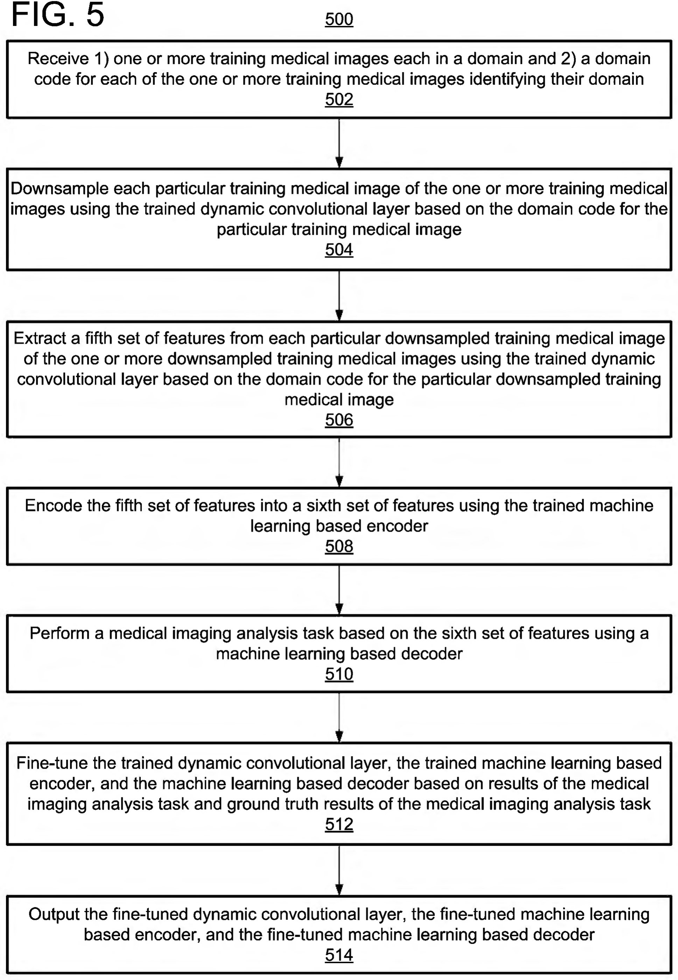

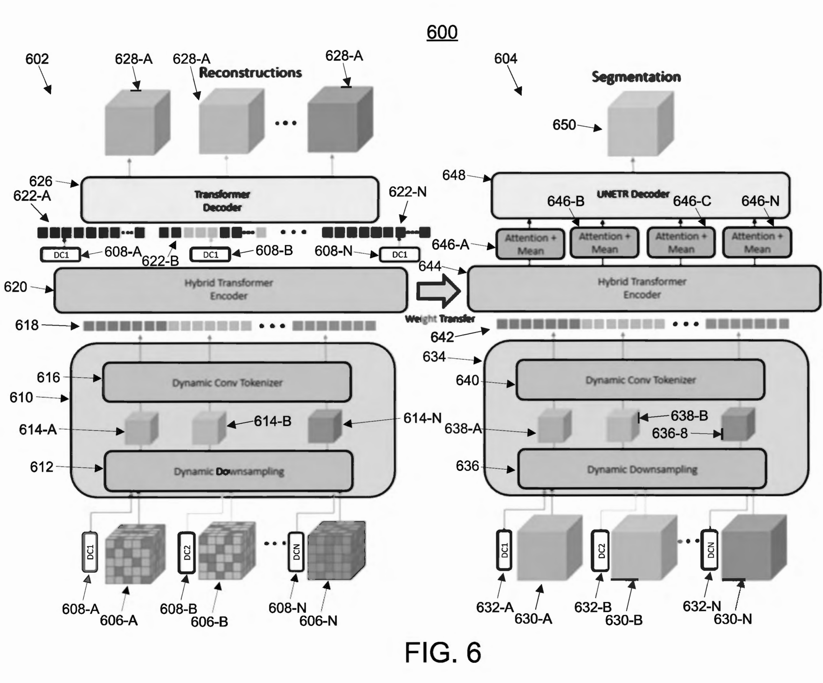

Figure 4 shows a method 400 for pretraining a variable input vision transformer architecture for performing a medical imaging analysis task, in accordance with one or more embodiments. Figure 5 shows a method 500 for fine-tuning a pretrained variable input vision transformer architecture for performing a medical imaging analysis task, in accordance with one or more embodiments. The steps and sub-steps of method 400 and/or method 500 may be performed by one or more suitable computing devices, such as, e.g., computer 1402 of Figure 14. Figure 6 shows a workflow 600 for training a variable input vision transformer architecture for performing a medical imaging analysis task, in accordance with one or more embodiments. Figure 4-6 will be described together.

The steps of method 400 of Figure 4, method 500 of Figure 5, and workflow 600 of Figure 6 are performed during an offline or training stage for training a variable input vision transformer architecture. It should be understood that features described with respect to applying the trained variable input vision transformer architecture (e.g., as described with respect to method 100 of Figure 1 and workflow 200 of Figure 2) may be applied with respect to training the variable input vision transformer architecture (e.g., as described with respect to method 400 of Figure 4, method 500 of Figure 5, and workflow 600 of Figure 6), and vice versa.

As shown in Figure 6, workflow 600 for training the variable input vision transformer architecture comprises a pretraining stage 602 (e.g., as described with respect to method 400 of Figure 4) for pretraining dynamic patch tokenizer 610 and hybrid transformer encoder 620 according to an image reconstruction task and a finetuning stage 604 (e.g., as described with respect to method 500 of Figure 5) for finetuning dynamic patch tokenizer 634, hybrid transformer encoder 644, and decoder 648 for performing a medical imaging analysis task.

Figure 4 shows a method 400 for pretraining a variable input vision transformer architecture for performing a medical imaging analysis task. At step 402 of Figure 4, 1) one or more masked training medical images each in a domain and 2) a domain code for each of the one or more training medical images identifying its domain are received. As shown in workflow 600 of Figure 6, the one or more masked training medical images may be masked training medical images 606-A, 606-B, ..., 606-N (collectively referred to as masked training medical images 606) respectively in domains 1, 2, ..., N and the domain codes may be domain codes 608-A, 608-B, ..., 608-N (collectively referred to as domain codes 608) respectively identifying the domain of masked training medical images 606-A, 606-B, ..., 606-N.

The one or more masked training medical images are generated by masking patches of one or more training medical images (e.g., randomly). The one or more training medical images may depict the brain of a patient or any other suitable anatomical object of interest. In some embodiments, instead of receiving the one or more masked training medical images, one or more training medical images are received and the one or more training medical images are masked. The one or more masked training medical images may be of any suitable domain. The one or more masked training medical images may be represented in the image space or the latent space. The one or more masked training medical images in the image space may be 2D images and/or 3D volumes.

The domain codes respectively identify the domain of the one or more masked training medical images. The domain codes may be represented in any suitable form (e.g., vectors). Each combination of values of the domain codes are associated with a domain (e.g., predefined by a user or learned during training). Other approaches for encoding the identification of a domain in a domain code are also contemplated.

The one or more masked training medical images and/or the domain codes may be received, for example, by directly receiving the one or more masked training medical images from an image acquisition device (e.g., image acquisition device 1414 of Figure 14) as the one or more masked training medical images are acquired, by loading the one or more masked training medical images and/or the domain codes from a storage or memory of a computer system (e.g., storage 1412 or memory 1410 of computer 1402 of Figure 14), or by receiving the one or more masked training medical images and/or the domain codes from a remote computer system (e.g., computer 1402 of Figure 14).

At step 404 of Figure 4, each particular masked training medical image of the one or more masked training medical images is downsampled using a dynamic convolutional layer based on the domain code for the particular masked training medical image. In one example, as shown in workflow 600 of Figure 6, each masked training medical image 606-A, 606-B, ..., 606-N is respectively downsampled by dynamic downsampling 612 of dynamic patch tokenizer 610 based on domain codes 608-A, 608-B, ..., 608-N to generate downsampled masked training medical images 614-A, 614-B, ..., 614-N (collectively referred to as downsampled masked training medical images 614).

Each particular masked training medical image of the one or more masked training medical images is downsampled by 1) for each respective one of the domain codes, determining one or more weights based on the respective domain code, 2) updating one or more parameters of the dynamic convolutional layer based on the one or more weights, and 3) downsampling the particular masked training medical image using the dynamic convolutional layer with the one or more updated parameters.

In one embodiment, the one or more parameters of the dynamic convolutional layer comprise a weight parameter W and a bias parameter *B.* Each domain is assigned a unique domain code ${m}_{i} ∈ {ℝ}^{l}$. The domain code is projected or mapped to weight vector *w_{conv}* and a bias vector *b_{conv}* through a set of parameters of a linear projector optimized during a training process. The weight parameter W may be updated, for example, by calculating the dot product of the weight parameter W and the weight vector *w_{conv}* (i.e., *W_{updated} = W* · *w_{conv}*) and the bias parameter *B* may be updated by calculating the dot product of the bias parameter *B* and the bias vector *b_{conv}*(i.e., *B_{updated} = B · b_{conv}*). The one or more parameters of the dynamic convolutional layer may be updated according to any other suitable approach.

The dynamic convolutional layer with the one or more updated parameters receives as input the particular masked training medical image and generates as output *Yᵢ = Conv(X, W_{updated}, B_{updated}*)*.* In one embodiment, the dynamic convolutional layer is configured with a 7x7x7 kernel size and a stride of 2 to downsample the input medical images over a large receptive field, but may be configured according to any other suitable configuration.

At step 406 of Figure 4, a third set of features is extracted from each particular downsampled masked training medical image of the one or more downsampled masked training medical images using the dynamic convolutional layer based on the domain code for the particular downsampled masked training medical image. In one example, as shown in workflow 600 of Figure 6, features 618 are extracted from downsampled masked training medical images 614-A, 614-B, ..., 614-N using dynamic convolutional tokenizer 616 of dynamic patch tokenizer 610.

In one embodiment, the third set of features is extracted from each particular downsampled masked training medical image of the one or more downsampled masked training medical images using the dynamic convolutional layer with the one or more updated parameters. The one or more updated parameters (e.g., weight vector *w_{conv}* and a bias vector *b_{conv}*) may be updated based on the domain code for the particular downsampled masked training medical image, as described at step 404 of Figure 4. The dynamic convolutional layer (with the one or more updated parameters) receives as input patches extracted from the one or more downsampled masked training medical images, maps each patch to a token of features, and generates as output the tokens representing the first set of features. The dynamic convolutional layer may be the same as applied at step 404 of Figure 4, however configured with a different kernel size and stride. For example, in one embodiment, the dynamic convolutional layer may be configured using the patch size as the kernel size and the stride size.

At step 408 of Figure 4, the third set of features are encoded into a fourth set of features using a machine learning based encoder. In one example, as shown in workflow 600 of Figure 6, third set of features 618 are encoded into a fourth set of features (not shown) by hybrid transformer encoder 620.

The tokens of the third set of features are combined (e.g., concatenated) into a single sequence and input into the machine learning based encoder. The tokens of the third set of features are encoded with positional embeddings based on the position of their patch within the one or more input medical images. In addition, modality embeddings are generated from the domain codes using another linear projector and the tokens of the third set of features are encoded with modality embeddings. The machine learning based encoder receives as input the third set of features (represented as a sequence of tokens encoded with the position embeddings and the modality embeddings) and generates as output the fourth set of features. In one embodiment, the machine learning based encoder is a dynamic transformer-convolution encoder for learning the relationships between the patches. The dynamic transformer-convolution encoder comprises one or more encoding levels each comprising a respective self-attention layer and a respective dynamic convolutional layer. Figure 3 shows an exemplary architecture of a dynamic transformer-convolution encoder. However, the machine learning based encoder may be implemented in any other suitable form.

At step 410 of Figure 4, tokens representing the masked patches of the one or more training medical images are inserted into the fourth set of features. In one example, as shown in workflow 600 of Figure 6, tokens representing the masked patches are inserted into the fourth set of features to provide features 622-A, 622-B, ..., 622-N for each domain (according to domain codes 608). The tokens representing the masked patches are placeholder tokens inserted into the sequence of the fourth set of features at the position of each masked patch.

At step 412 of Figure 4, the one or more training medical images are reconstructed based on the fourth set of features with the inserted tokens using a machine learning based decoder. In one example, as shown in workflow 600 of Figure 6, training medical images (from which masked training medical images 606-A, 606-B, ..., 606-N are masked) are reconstructed based on features 622-A, 622-B, ..., 622-N by transformer decoder 626 to generate reconstructed images 628-A, 628-B, ..., 628-N.

In one embodiment, the machine learning based decoder is a transformer decoder. However, the machine learning based decoder may be implemented according to any other suitable architecture. The machine learning based decoder receives as input the fourth set of features with the inserted tokens and generates as output the reconstructed images.

At step 414 of Figure 3, the dynamic convolutional layer and the machine learning based encoder (and optionally the machine learning based decoder) are trained based on the one or more training medical images and the one or more reconstructed training medical images. In one embodiment, the dynamic convolutional layer and the machine learning based encoder are trained by comparing the one or more training medical images and the one or more reconstructed training medical images according to a loss function. In one embodiment, the loss function is an L2 loss function. However, the loss function may comprise any other suitable loss function. During training, parameters (e.g., attention weights, feed-forward network weights, layer normalization parameters, token embeddings, etc.) of the dynamic convolutional layer and the machine learning based encoder are updated via back propagation.

At step 416 of Figure 4, the trained dynamic convolutional layer and the trained machine learning based encoder (and optionally the machine learning based decoder) are output. For example, the trained dynamic convolutional layer and the trained machine learning based encoder can be output by storing the trained dynamic convolutional layer and the trained machine learning based encoder on a memory or storage of a computer system (e.g., memory 1410 or storage 1412 of computer 1402 of Figure 14) or by transmitting the trained dynamic convolutional layer and the trained machine learning based encoder to a remote computer system (e.g., computer 1402 of Figure 14). The trained dynamic convolutional layer and the trained machine learning based encoder may be output for fine-tuning, e.g., according to method 500 of Figure 5.

Figure 5 shows a method 500 for fine-tuning a pretrained variable input vision transformer architecture for performing a medical imaging analysis task. At step 502 of Figure 5, 1) one or more training medical images each in a domain and 2) a domain code for each of the one or more training medical images identifying its domain are received. As shown in workflow 600 of Figure 6, the one or more training medical images may be input medical images 630-A, 630-B, ..., 630-N (collectively referred to as training medical images 630) respectively in domains 1, 2, ..., N and the domain codes may be domain codes DC1 632-A, DC2 632-B, ..., DCN 632-N (collectively referred to as domain codes 632) respectively identifying the domain of input medical images 630-A, 630-B, ..., 630-N. The one or more training medical images received at step 502 may be the same or different than the one or more training medical images from which the one or more masked training medical images received at step 402 of Figure 4 are generated.

The one or more training medical images may depict the brain of a patient or any other suitable anatomical object of interest. The one or more masked training medical images may be of any suitable domain and may be represented in the image space or the latent space. The one or more training medical images in the image space may be 2D images and/or 3D volumes.

The domain codes respectively identify the domain of the one or more training medical images. The domain codes may be represented in any suitable form (e.g., vectors). Each combination of values of the domain codes are associated with a domain (e.g., predefined by a user or learned during training). Other approaches for encoding the identification of a domain in a domain code are also contemplated.

The one or more training medical images and/or the domain codes may be received, for example, by directly receiving the one or more training medical images from an image acquisition device (e.g., image acquisition device 1414 of Figure 14) as the one or more training medical images are acquired, by loading the one or more training medical images and/or the domain codes from a storage or memory of a computer system (e.g., storage 1412 or memory 1410 of computer 1402 of Figure 14), or by receiving the one or more training medical images and/or the domain codes from a remote computer system (e.g., computer 1402 of Figure 14).

At step 504 of Figure 5, each particular training medical image of the one or more training medical images is downsampled using a dynamic convolutional layer based on the domain code for the particular input medical image. In one example, as shown in workflow 600 of Figure 6, each training medical image 630-A, 630-B, ..., 630-N is respectively downsampled by dynamic downsampling 636 of dynamic patch tokenizer 634 based on domain codes 632-A, 632-B, ..., 632-N to generate downsampled training medical images 638-A, 638-B, ..., 638-N (collectively referred to as downsampled input medical images 638). It should be understood that while dynamic downsampling 612 and 636 are separately shown in workflow 600 to illustrate the processing workflow, dynamic downsampling 612 and 636 refer to the same dynamic downsampling layer (but possibly with different configurations).

Each particular training medical image of the one or more training medical images is downsampled by 1) for each respective one of the domain codes, determining one or more weights based on the respective domain code, 2) updating one or more parameters of the dynamic convolutional layer based on the one or more weights, and 3) downsampling the particular training medical image using the dynamic convolutional layer with the one or more updated parameters.

In one embodiment, the one or more parameters of the dynamic convolutional layer comprise a weight parameter W and a bias parameter *B.* The domain code is projected or mapped to weight vector *w_{conv}* and a bias vector *b_{conv}* through a set of parameters of a linear projector optimized during a training process. The weight parameter W may be updated, for example, by calculating the dot product of the weight parameter W and the weight vector *w_{conv}* (i.e., *W_{updated} = W · w_{conv}*) and the bias parameter *B* may be updated by calculating the dot product of the bias parameter *B* and the bias vector *b_{conv}*(i.e., *B_{updated} = B · b_{conv}*). The one or more parameters of the dynamic convolutional layer may be updated according to any other suitable approach.

The dynamic convolutional layer with the one or more updated parameters receives as input the particular training medical image and generates as output *Yᵢ* = *Conv*(*X, W_{updated}, B_{updated}*). In one embodiment, the dynamic convolutional layer is configured with a 7x7x7 kernel size and a stride of 2 to downsample the input medical images over a large receptive field, but may be configured according to any other suitable configuration.

At step 506 of Figure 5, a fifth set of features is extracted from each particular downsampled training medical image of the one or more downsampled training medical images using the dynamic convolutional layer based on the domain code for the particular downsampled training medical image. In one example, as shown in workflow 600 of Figure 6, features 642 are extracted from downsampled training medical images 638-A, 638-B, ..., 638-N using dynamic convolutional tokenizer 640 of dynamic patch tokenizer 634. It should be understood that while dynamic convolutional tokenizer 616 and 640 are separately shown in workflow 600 to illustrate the processing workflow, dynamic convolutional tokenizer 616 and 640 refer to the same dynamic convolutional tokenizer (but possibly with different configurations).

In one embodiment, the fifth set of features is extracted from each particular downsampled training medical image of the one or more downsampled training medical images using the dynamic convolutional layer with the one or more updated parameters. The one or more updated parameters may be updated based on the domain code for the particular downsampled training medical image, as described at step 504 of Figure 5. The dynamic convolutional layer (with the one or more updated parameters) receives as input patches extracted from the one or more downsampled training medical images, maps each patch to a token of features, and generates as output the tokens representing the fifth set of features. The dynamic convolutional layer may be the same as applied at step 104 of Figure 1, however configured with a different kernel size and stride. For example, in one embodiment, the dynamic convolutional layer may be configured using the patch size as the kernel size and the stride size.

At step 508 of Figure 5, the fifth set of features is encoded into a sixth set of features using the trained machine learning based encoder. In one example, as shown in workflow 600 of Figure 6, features 642 are encoded into features (not shown) by hybrid transformer encoder 644. It should be understood that while hybrid transformer encoder 620 and 644 are separately shown in workflow 600 to illustrate the processing workflow, hybrid transformer encoder 620 and 644 refer to the same hybrid transformer encoder. Weights of the hybrid transformer encoder 620 learned during pretraining stage 602 are transferred to hybrid transformer encoder 644 for further fine-tuning.

The tokens of the fifth set of features are combined (e.g., concatenated) into a single sequence and input into the machine learning based encoder. The tokens of the fifth set of features are encoded with positional embeddings based on the position of their patch within the one or more input medical images. In addition, modality embeddings are generated from the domain codes using another linear projector and the tokens of the fifth set of features are encoded with modality embeddings. The machine learning based encoder receives as input the fifth set of features (represented as a sequence of tokens encoded with the position embeddings and the modality embeddings) and generates as output the sixth set of features. In one embodiment, the machine learning based encoder is a dynamic transformer-convolution encoder for learning the relationships between the patches. Figure 3 shows an exemplary architecture of a dynamic transformer-convolution encoder. However, the machine learning based encoder may be implemented in any other suitable form.

At step 510 of Figure 5, a medical imaging analysis task is performed based on the sixth set of features using a machine learning based decoder. In one embodiment, the medical imaging analysis task is segmentation of the anatomical object of interest from the one or more input medical images, but may comprise any other suitable medical imaging analysis task. In one embodiment, the machine learning based decoder is a domain fusion decoder comprising attention and means layers and a decoder. The sequence of the sixth set of features is decoded in two decoding steps, as described above with respect to step 110 of Figure 1.

At step 512 of Figure 5, the trained dynamic convolutional layer, the trained machine learning based encoder, and the machine learning based decoder are fine-tuned based on results of the medical imaging analysis task and ground truth results of the medical imaging analysis task. In one embodiment, the trained dynamic convolutional layer, the trained machine learning based encoder, and the machine learning based decoder are fine-tuned by comparing the results of the medical imaging analysis task and the ground truth results of the medical imaging analysis task according to a loss function. During the fine-tuning, the parameters of the dynamic convolutional layer and the machine learning based encoder are adjusted based on the comparison.

At step 514 of Figure 5, the fine-tuned dynamic convolutional layer, the fine-tuned machine learning based encoder, and the fine-tuned machine learning based decoder are output. For example, the fine-tuned dynamic convolutional layer, the fine-tuned machine learning based encoder, and the fine-tuned machine learning based decoder can be output by storing the fine-tuned dynamic convolutional layer, the fine-tuned machine learning based encoder, and the fine-tuned machine learning based decoder on a memory or storage of a computer system (e.g., memory 1410 or storage 1412 of computer 1402 of Figure 14) or by transmitting the fine-tuned dynamic convolutional layer, the fine-tuned machine learning based encoder, and the fine-tuned machine learning based decoder to a remote computer system (e.g., computer 1402 of Figure 14). The fine-tuned dynamic convolutional layer, the fine-tuned machine learning based encoder, and the fine-tuned machine learning based decoder may be output as, for example, the dynamic convolutional layer, the machine learning based encoder, and the machine learning based decoder utilized in method 100 of Figure 1 and/or the dynamic convolutional layer of dynamic downsampling 208 and dynamic convolutional tokenizer 212, the hybrid transformer encoder 216, attention and mean layers 218 and UNETR decoder 220 of Figure 2.

Embodiments described herein were experimentally verified. For the medical imaging analysis task of brain infarct segmentation, a dataset having 1,648 training, 193 validation, and 215 test studies was utilized, all annotated by expert radiologists for acute/ subacute brain infarct segmentation. All studies in this dataset include Trace-weighted (TraceW) and Apparent Diffusion Coefficient (ADC) images, while the T2-weighted (T2) image is an optional contrast that may or may not be present. For the medical imaging analysis task of brain tumor segmentation, the BraTS 2021 dataset was utilized, which is comprised of 1,251 brain MR studies. Each study includes four contrasts: Fluid Attenuated Inversion Recovery (FLAIR), native T1-weighted (T1), post-contrast T1-weighted (T1CE), and T2-weighted (T2) images, and each study is annotated with three tumor regions: tumor core (TC), whole tumor (WT), and enhancing tumor (ET). In the experiments, the dataset is split into 1,001 training, 100 validation, and 150 test studies. For the self-supervised pretraining stage, an internal dataset with 45,374 MRI studies was used and each study has a variable number of MRI contrasts. For each study, all available contrasts from the following eight were used: ADC, TraceW, T2, Gradient Echo (GRE), Susceptibility-Weighted Imaging (SWI), T1, T1CE, and FLAIR.

The proposed variable input vision transformer (VIViT) framework was implemented with MONAI (medical open network for AI) and PyTorch frameworks. All experiments were done on 4 NVIDIA A100 GPUs (40GB). For self-supervised learning (SSL), a weighted Adam optimizer, an L2 loss function, and a cosine annealing scheduler with an initial learning rate of 1e-5 were used. The SSL pretraining was done for 500 epochs with a 70% masking ratio and a batch size of 4. The downstream brain infarct and tumor segmentation tasks were trained with a Dice loss, a weighted Adam optimizer, and a cosine annealing scheduler with an initial learning rate of 1e-4 for 200 and 300 epochs, respectively. 3D input volumes were normalized to have zero mean and unit standard deviation based on non-zero voxels and were resized to 128x128x128. The best validation weights were used for testing, and the Dice similarity coefficient was used for evaluation.

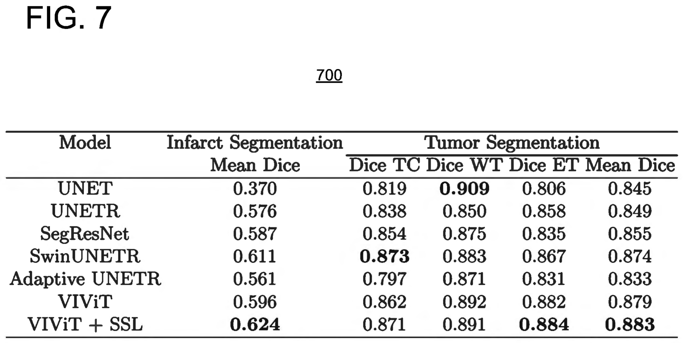

For segmentation tasks, we compared the performance of VIViT with UNET, UNETR, SegResNet, SwinUNETR, and AdaptiveUNETR on brain infarct and tumor segmentation. For the models not designed to handle variable sets of input contrasts, a zero-filled tensor is used when any modality is unavailable in a study (e.g. in infarct segmentation, T2 may be absent for some studies). Figure 7 shows a table 700 comparing the VIViT method in accordance with embodiments described herein with conventional approaches. As shown in table 700, the proposed VIViT method outperformed all the compared methods and achieved the best mean Dice score (0.624 for brain infarct segmentation and 0.883 for brain tumor segmentation).

Notably, VIViT with self-supervised pretraining improves the segmentation performance over VIViT without pretraining by 2.8% on brain infarct and by 0.4% on brain tumor, demonstrating the effectiveness of pretraining in enhancing downstream performance. The proposed VIViT framework can learn from studies with different sets of contrasts during pretraining, which gives it the ability to leverage as many studies as available (> 45,000 studies in our experiment) to significantly benefit downstream tasks. Furthermore, the pretrained model is highly effective in transferring knowledge across different segmentation tasks, despite variations in input requirements and contrast availability.

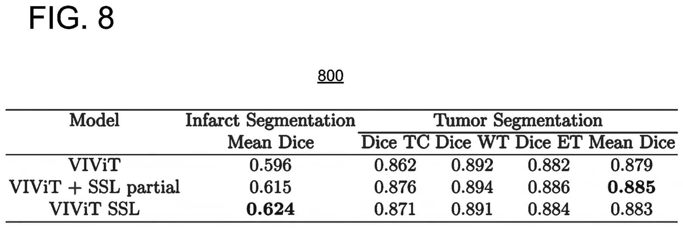

To further study the impact of VIViT's pretrain when the downstream task has new contrasts that are unseen in pretrain (pretrain and finetune's input contrast sets are joint sets), another self-supervised pretrain was conducted (SSL partial in table 800 of Figure 8), excluding all available T1 and T2 contrasts from the pretrain dataset. The pretrained model is finetuned and tested on the same downstream tasks' data (where infarct has T2 and BraTS has T1 and T2 as unseen contrasts in pretrain). The results are shown in table 800 of Figure 8. Figure 8 shows a table 800 comparing the performance of the VIViT method in accordance with embodiments described herein for different input contrast set situations between pretrain and finetune. Despite the unseen input contrasts in pretrain, the pretrain can still benefit the downstream tasks by transferring the knowledge learned from their common contrasts (intersection of the joint sets), while incremental knowledge about the new contrasts only seen in finetune and their relationship with the common contrasts can be "picked up" during finetune. Also, table 800 shows that for brain infarct segmentation the benefit of pretrain is greater when it covers all the downstream task's input contrasts (SSL in table 800, finetune input contrast set is a subset of the pretrain).

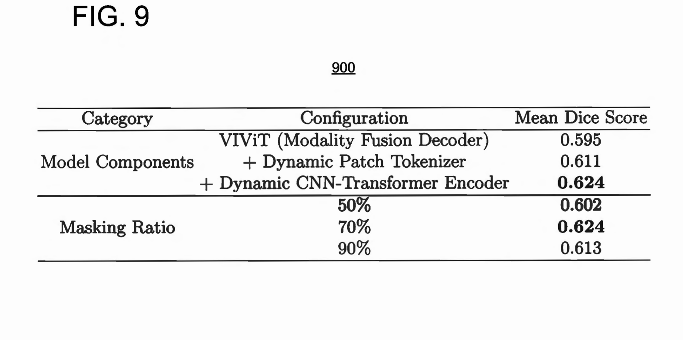

Figure 9 shows a table 900 comparing the performance of the VIViT method in accordance with embodiments described herein with different model components and masking ratios. The baseline VIViT model with only the modality fusion decoder achieves a mean Dice score of 0.595 on brain infarct segmentation. After replacing the original ViT tokenizer with the proposed two-stage dynamic patch tokenizer, the performance improves to a mean Dice score of 0.611, indicating the effectiveness of the 2-stage tokenization and the benefit of feature extraction with a large convolution kernel. Moreover, replacing the transformer encoder with the proposed dynamic transformer-convolution encoder further improves the performance to a mean Dice score of 0.624, demonstrating the new encoder's superior performance by extracting local and global features with the spatial relationship of the features taken into consideration. In addition, the effect of different masking ratios in self-supervised pretrain on the downstream task was investigated. Table 900 shows that with 70% masking ratio, VIViT achieved the best mean Dice score on brain infarct segmentation. A too-high or too-low masking ratio may negatively affect the downstream task's performance.

Advantageously, the variable input vision transformer framework in accordance with embodiments described herein effectively improves the deep learning model's adaptability and performance on real world heterogeneous MR data and tasks. The novel dynamic patch tokenizer, dynamic transformer-convolution encoder, and modality fusion decoder enable the proposed framework to efficiently process variable set of input contrasts in each study during pretraining and finetuning. Through extensive experiments on brain infarct and brain tumor segmentation, the variable input vision transformer framework was found to have superior performance over the conventional CNN and ViT based methods.

Embodiments described herein are described with respect to the claimed systems as well as with respect to the claimed methods. Features, advantages or alternative embodiments herein can be assigned to the other claimed objects and vice versa. In other words, claims and embodiments for the systems can be improved with features described or claimed in the context of the respective methods. In this case, the functional features of the method are implemented by physical units of the system.

Furthermore, certain embodiments described herein are described with respect to methods and systems utilizing trained machine learning models, as well as with respect to methods and systems for providing trained machine learning models. Features, advantages or alternative embodiments herein can be assigned to the other claimed objects and vice versa. In other words, claims and embodiments for providing trained machine learning models can be improved with features described or claimed in the context of utilizing trained machine learning models, and vice versa. In particular, datasets used in the methods and systems for utilizing trained machine learning models can have the same properties and features as the corresponding datasets used in the methods and systems for providing trained machine learning models, and the trained machine learning models provided by the respective methods and systems can be used in the methods and systems for utilizing the trained machine learning models.

In general, a trained machine learning model mimics cognitive functions that humans associate with other human minds. In particular, by training based on training data the machine learning model is able to adapt to new circumstances and to detect and extrapolate patterns. Another term for "trained machine learning model" is "trained function."

In general, parameters of a machine learning model can be adapted by means of training. In particular, supervised training, semi-supervised training, unsupervised training, reinforcement learning and/or active learning can be used. Furthermore, representation learning (an alternative term is "feature learning") can be used. In particular, the parameters of the machine learning models can be adapted iteratively by several steps of training. In particular, within the training a certain cost function can be minimized. In particular, within the training of a neural network the backpropagation algorithm can be used.

In particular, a machine learning model, such as, e.g., the dynamic convolutional layer utilized at step 104 and 106, the machine learning based encoder utilized at step 108, and the machine learning based decoder utilized at step 110 of Figure 1, dynamic downsampling 208, dynamic convolutional tokenizer 212, hybrid transformer encoder 216, and UNETR decoder 220 of Figure 2, self-attention layers 302 and dynamic convolutional layers 304 of Figure 3, dynamic convolutional layer utilized at steps 404 and 406, the machine learning based encoder utilized at step 408, the machine learning based decoder utilized at step 412 of Figure 4, the trained dynamic convolutional layer utilized at steps 504 and 506, the trained machine learning based encoder utilized at step 508, and the machine learning based decoder utilized at step 510, dynamic downsampling 612, dynamic convolutional tokenizer 616, hybrid transformer encoder 620, transformer decoder 626, dynamic downsampling 636, dynamic convolutional tokenizer 640, hybrid transformer encoder 544, attention and mean layers 646, and UNETR decoder 648 of Figure 6, can comprise, for example, a neural network, a support vector machine, a decision tree and/or a Bayesian network, and/or the machine learning model can be based on, for example, k-means clustering, Q-learning, genetic algorithms and/or association rules. In particular, a neural network can be, e.g., a deep neural network, a convolutional neural network or a convolutional deep neural network. Furthermore, a neural network can be, e.g., an adversarial network, a deep adversarial network and/or a generative adversarial network.

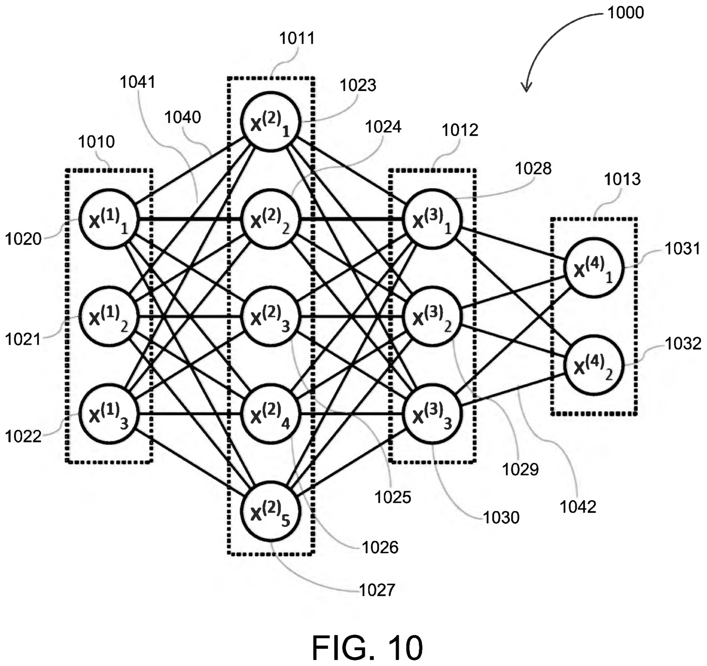

Figure 10 shows an embodiment of an artificial neural network 1000 that may be used to implement one or more machine learning models described herein. Alternative terms for "artificial neural network" are "neural network", "artificial neural net" or "neural net".

The artificial neural network 1000 comprises nodes 1020, ..., 1032 and edges 1040, ..., 1042, wherein each edge 1040, ..., 1042 is a directed connection from a first node 1020, ..., 1032 to a second node 1020, ..., 1032. In general, the first node 1020, ..., 1032 and the second node 1020, ..., 1032 are different nodes 1020, ..., 1032, it is also possible that the first node 1020, ..., 1032 and the second node 1020, ..., 1032 are identical. For example, in Figure 10 the edge 1040 is a directed connection from the node 1020 to the node 1023, and the edge 1042 is a directed connection from the node 1030 to the node 1032. An edge 1040, ..., 1042 from a first node 1020, ..., 1032 to a second node 1020, ..., 1032 is also denoted as "ingoing edge" for the second node 1020, ..., 1032 and as "outgoing edge" for the first node 1020, ..., 1032.

In this embodiment, the nodes 1020, ..., 1032 of the artificial neural network 1000 can be arranged in layers 1010, ..., 1013, wherein the layers can comprise an intrinsic order introduced by the edges 1040, ..., 1042 between the nodes 1020, ..., 1032. In particular, edges 1040, ..., 1042 can exist only between neighboring layers of nodes. In the displayed embodiment, there is an input layer 1010 comprising only nodes 1020, ..., 1022 without an incoming edge, an output layer 1013 comprising only nodes 1031, 1032 without outgoing edges, and hidden layers 1011, 1012 in-between the input layer 1010 and the output layer 1013. In general, the number of hidden layers 1011, 1012 can be chosen arbitrarily. The number of nodes 1020, ..., 1022 within the input layer 1010 usually relates to the number of input values of the neural network, and the number of nodes 1031, 1032 within the output layer 1013 usually relates to the number of output values of the neural network.

In particular, a (real) number can be assigned as a value to every node 1020, ..., 1032 of the neural network 1000. Here, x⁽ⁿ⁾ᵢ denotes the value of the i-th node 1020, ..., 1032 of the n-th layer 1010, ..., 1013. The values of the nodes 1020, ..., 1022 of the input layer 1010 are equivalent to the input values of the neural network 1000, the values of the nodes 1031, 1032 of the output layer 1013 are equivalent to the output value of the neural network 1000. Furthermore, each edge 1040, ..., 1042 can comprise a weight being a real number, in particular, the weight is a real number within the interval [-1, 1] or within the interval [0, 1]. Here, w^{(m,n)}_{i,j} denotes the weight of the edge between the i-th node 1020, ..., 1032 of the m-th layer 1010, ..., 1013 and the j-th node 1020, ..., 1032 of the n-th layer 1010, ..., 1013. Furthermore, the abbreviation w⁽ⁿ⁾_{i,j} is defined for the weight w^{(n,n+1)}_{i,j.}

In particular, to calculate the output values of the neural network 1000, the input values are propagated through the neural network. In particular, the values of the nodes 1020, ..., 1032 of the (n+1)-th layer 1010, ..., 1013 can be calculated based on the values of the nodes 1020, ..., 1032 of the n-th layer 1010, ..., 1013 by ${x}^{{\left(n+1\right)}_{j}} = f \left({\sum }_{i} {x}^{{\left(n\right)}_{i}} ⋅ {w}^{{\left(n\right)}_{i , j}}\right) .$

Herein, the function f is a transfer function (another term is "activation function"). Known transfer functions are step functions, sigmoid function (e.g., the logistic function, the generalized logistic function, the hyperbolic tangent, the Arctangent function, the error function, the smoothstep function) or rectifier functions. The transfer function is mainly used for normalization purposes.

In particular, the values are propagated layer-wise through the neural network, wherein values of the input layer 1010 are given by the input of the neural network 1000, wherein values of the first hid-den layer 1011 can be calculated based on the values of the input layer 1010 of the neural network, wherein values of the second hidden layer 1012 can be calculated based in the values of the first hidden layer 1011, etc.

In order to set the values w^{(m,n)i,j} for the edges, the neural network 1000 has to be trained using training data. In particular, training data comprises training input data and training output data (denoted as tᵢ). For a training step, the neural network 1000 is applied to the training input data to generate calculated output data. In particular, the training data and the calculated output data comprise a number of values, said number being equal with the number of nodes of the output layer.

In particular, a comparison between the calculated output data and the training data is used to recursively adapt the weights within the neural network 1000 (backpropagation algorithm). In particular, the weights are changed according to $w {′}^{{\left(n\right)}_{i , j}} = {w}^{{\left(n\right)}_{i , j}} - γ ⋅ {δ}^{{\left(n\right)}_{j}} ⋅ {x}^{{\left(n\right)}_{i}}$ wherein y is a learning rate, and the numbers δ⁽ⁿ⁾ⱼ can be recursively calculated as ${δ}^{{\left(n\right)}_{j}} = \left({\sum }_{k} {δ}^{{\left(n+1\right)}_{k}} ⋅ {w}^{{\left(n+1\right)}_{j , k}}\right) ⋅ f ′ \left({\sum }_{i} {x}^{{\left(n\right)}_{i}} ⋅ {w}^{{\left(n\right)}_{i , j}}\right)$ based on δ⁽ⁿ⁺¹⁾ⱼ, if the (n+1)-th layer is not the output layer, and ${δ}^{{\left(n\right)}_{j}} = \left({x}^{{\left(n+1\right)}_{j}}-{t}^{{\left(n+1\right)}_{j}}\right) ⋅ f ′ \left({x}^{{\left(n\right)}_{i}}⋅{w}^{{\left(n\right)}_{i , j}}\right)$ if the (n+1)-th layer is the output layer 1013, wherein f is the first derivative of the activation function, and t⁽ⁿ⁺¹⁾ⱼ is the comparison training value for the j-th node of the output layer 1013.

A convolutional neural network is a neural network that uses a convolution operation instead of general matrix multiplication in at least one of its layers (so-called "convolutional layer"). In particular, a convolutional layer performs a dot product of one or more convolution kernels with the convolutional layer's input data / image, wherein the entries of the one or more convolution kernels are the parameters or weights that are adapted by training. In particular, one can use the Frobenius inner product and the ReLU activation function. A convolutional neural network can comprise additional layers, e.g., pooling layers, fully connected layers, and normalization layers.

By using convolutional neural networks input images can be processed in a very efficient way, because a convolution operation based on different kernels can extract various image features, so that by adapting the weights of the convolution kernel the relevant image features can be found during training. Furthermore, based on the weight-sharing in the convolutional kernels less parameters need to be trained, which prevents overfitting in the training phase and allows to have faster training or more layers in the network, improving the performance of the network.

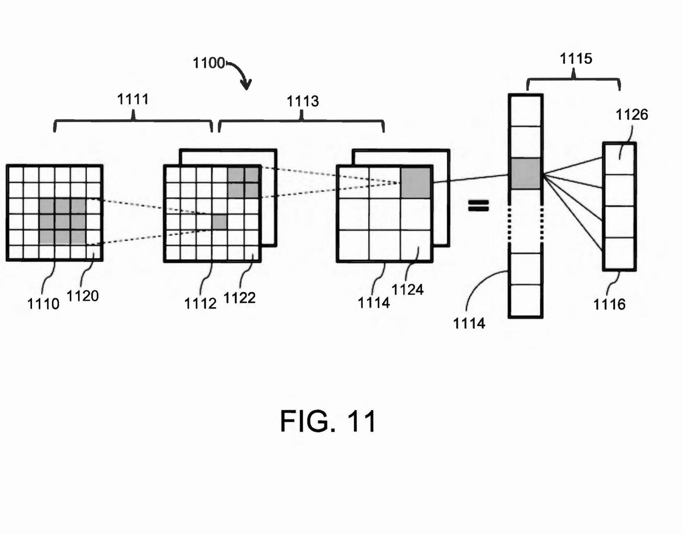

Figure 11 shows an embodiment of a convolutional neural network 1100 that may be used to implement one or more machine learning models described herein. In the displayed embodiment, the convolutional neural network 1100 comprises an input node layer 1110, a convolutional layer 1111, a pooling layer 1113, a fully connected layer 1114 and an output node layer 1116, as well as hidden node layers 1112, 1114. Alternatively, the convolutional neural network 1100 can comprise several convolutional layers 1111, several pooling layers 1113 and several fully connected layers 1115, as well as other types of layers. The order of the layers can be chosen arbitrarily, usually fully connected layers 1115 are used as the last layers before the output layer 1116.

In particular, within a convolutional neural network 1100 nodes 1120, 1122, 1124 of a node layer 1110, 1112, 1114 can be considered to be arranged as a d-dimensional matrix or as a d-dimensional image. In particular, in the two-dimensional case the value of the node 1120, 1122, 1124 indexed with i and j in the n-th node layer 1110, 1112, 1114 can be denoted as x(n)[i, j]. However, the arrangement of the nodes 1120, 1122, 1124 of one node layer 1110, 1112, 1114 does not have an effect on the calculations executed within the convolutional neural network 1100 as such, since these are given solely by the structure and the weights of the edges.

A convolutional layer 1111 is a connection layer between an anterior node layer 1110 (with node values x(n-1)) and a posterior node layer 1112 (with node values x(n)). In particular, a convolutional layer 1111 is characterized by the structure and the weights of the incoming edges forming a convolution operation based on a certain number of kernels. In particular, the structure and the weights of the edges of the convolutional layer 1111 are chosen such that the values x(n) of the nodes 1122 of the posterior node layer 1112 are calculated as a convolution x(n) = K * x(n-1) based on the values x(n-1) of the nodes 1120 anterior node layer 1110, where the convolution * is defined in the two-dimensional case as ${x}_{k}^{\left(n\right)} \left[i, j\right] = \left(K*{x}^{\left(n-1\right)}\right) \left[i, j\right] = {\sum }_{i ′} {\sum }_{j ′} K \left[i′,j′\right] ⋅ {x}^{\left(n-1\right)} \left[i-i′,j-j′\right] .$

Here the kernel K is a d-dimensional matrix (in this embodiment, a two-dimensional matrix), which is usually small compared to the number of nodes 1120, 1122 (e.g., a 3x3 matrix, or a 5x5 matrix). In particular, this implies that the weights of the edges in the convolution layer 1111 are not independent, but chosen such that they produce said convolution equation. In particular, for a kernel being a 3x3 matrix, there are only 9 independent weights (each entry of the kernel matrix corresponding to one independent weight), irrespectively of the number of nodes 1120, 1122 in the anterior node layer 1110 and the posterior node layer 1112.

In general, convolutional neural networks 1100 use node layers 1110, 1112, 1114 with a plurality of channels, in particular, due to the use of a plurality of kernels in convolutional layers 1111. In those cases, the node layers can be considered as (d+1)-dimensional matrices (the first dimension indexing the channels). The action of a convolutional layer 1111 is then a two-dimensional example defined as ${x}^{{\left(n\right)}_{b}} \left[i, j\right] = {\sum }_{a} {K}_{a , b} * {x}^{{\left(n-1\right)}_{a}} \left[i, j\right] = {\sum }_{a} {\sum }_{i ′} {\sum }_{j ′} {K}_{a , b} \left[i′,j′\right] ⋅ {x}^{{\left(n-1\right)}_{a}} \left[i-i′,j-j′\right]$ where x^{(n-1)a} corresponds to the a-th channel of the anterior node layer 1110, x^{(n)b} corresponds to the b-th channel of the posterior node layer 1112 and K_{a,b} corresponds to one of the kernels. If a convolutional layer 1111 acts on an anterior node layer 1110 with A channels and outputs a posterior node layer 1112 with B channels, there are A·B independent d-dimensional kernels K_{a,b}.

In general, in convolutional neural networks 1100 activation functions are used. In this embodiment ReLU (acronym for "Rectified Linear Units") is used, with R(z) = max(0, z), so that the action of the convolutional layer 1111 in the two-dimensional example is $\begin{matrix}{x}^{{\left(n\right)}_{b}} \left[i, j\right] = R \left({\sum }_{a} \left({K}_{a , b}∗{x}^{{\left(n-1\right)}_{a}}\right) \left[i, j\right]\right) \\ = R \left({\sum }_{a} {\sum }_{i ′} {\sum }_{j ′} {K}_{a , b} \left[i′,j′\right] ⋅ {x}^{{\left(n-1\right)}_{a}} \left[i-i′,j-j′\right]\right)\end{matrix}$

It is also possible to use other activation functions, e.g., ELU (acronym for "Exponential Linear Unit"), LeakyReLU, Sigmoid, Tanh or Softmax.

In the displayed embodiment, the input layer 1110 comprises 36 nodes 1120, arranged as a two-dimensional 6x6 matrix. The first hidden node layer 1112 comprises 72 nodes 1122, arranged as two two-dimensional 6x6 matrices, each of the two matrices being the result of a convolution of the values of the input layer with a 3x3 kernel within the convolutional layer 1111. Equivalently, the nodes 1122 of the first hidden node layer 1112 can be interpreted as arranged as a three-dimensional 2x6x6 matrix, wherein the first dimension correspond to the channel dimension.

The advantage of using convolutional layers 1111 is that spatially local correlation of the input data can exploited by enforcing a local connectivity pattern between nodes of adjacent layers, in particular by each node being connected to only a small region of the nodes of the preceding layer.

A pooling layer 1113 is a connection layer between an anterior node layer 1112 (with node values x(n-1)) and a posterior node layer 1114 (with node values x(n)). In particular, a pooling layer 1113 can be characterized by the structure and the weights of the edges and the activation function forming a pooling operation based on a non-linear pooling function f. For example, in the two-dimensional case the values x(n) of the nodes 1124 of the posterior node layer 1114 can be calculated based on the values x(n-1) of the nodes 1122 of the anterior node layer 1112 as ${x}^{{\left(n\right)}_{b}} \left[i, j\right] = f \left({x}^{\left(n-1\right)}\left[{id}_{1}, {jd}_{2}\right],⋯,{x}^{{\left(n-1\right)}_{b}}\left[\left(i+1\right){d}_{1}-1, \left(j+1\right){d}_{2}-1\right]\right)$

In other words, by using a pooling layer 1113 the number of nodes 1122, 1124 can be reduced, by re-placing a number d1 ·d2 of neighboring nodes 1122 in the anterior node layer 1112 with a single node 1122 in the posterior node layer 1114 being calculated as a function of the values of said number of neighboring nodes. In particular, the pooling function f can be the max-function, the average or the L2-Norm. In particular, for a pooling layer 1113 the weights of the incoming edges are fixed and are not modified by training.

The advantage of using a pooling layer 1113 is that the number of nodes 1122, 1124 and the number of parameters is reduced. This leads to the amount of computation in the network being reduced and to a control of overfitting.

In the displayed embodiment, the pooling layer 1113 is a max-pooling layer, replacing four neighboring nodes with only one node, the value being the maximum of the values of the four neighboring nodes. The max-pooling is applied to each d-dimensional matrix of the previous layer; in this embodiment, the max-pooling is applied to each of the two two-dimensional matrices, reducing the number of nodes from 72 to 18.

In general, the last layers of a convolutional neural network 1100 are fully connected layers 1115. A fully connected layer 1115 is a connection layer between an anterior node layer 1114 and a posterior node layer 1116. A fully connected layer 1113 can be characterized by the fact that a majority, in particular, all edges between nodes 1114 of the anterior node layer 1114 and the nodes 1116 of the posterior node layer are present, and wherein the weight of each of these edges can be adjusted individually.

In this embodiment, the nodes 1124 of the anterior node layer 1114 of the fully connected layer 1115 are displayed both as two-dimensional matrices, and additionally as non-related nodes (indicated as a line of nodes, wherein the number of nodes was reduced for a better presentability). This operation is also denoted as "flattening". In this embodiment, the number of nodes 1126 in the posterior node layer 1116 of the fully connected layer 1115 smaller than the number of nodes 1124 in the anterior node layer 1114. Alternatively, the number of nodes 1126 can be equal or larger.

Furthermore, in this embodiment the Softmax activation function is used within the fully connected layer 1115. By applying the Softmax function, the sum the values of all nodes 1126 of the output layer 1116 is 1, and all values of all nodes 1126 of the output layer 1116 are real numbers between 0 and 1. In particular, if using the convolutional neural network 1100 for categorizing input data, the values of the output layer 1116 can be interpreted as the probability of the input data falling into one of the different categories.

In particular, convolutional neural networks 1100 can be trained based on the backpropagation algorithm. For preventing overfitting, methods of regularization can be used, e.g., dropout of nodes 1120, ..., 1124, stochastic pooling, use of artificial data, weight decay based on the L1 or the L2 norm, or max norm constraints.

According to an aspect, the machine learning model may comprise one or more residual networks (ResNet). In particular, a ResNet is an artificial neural network comprising at least one jump or skip connection used to jump over at least one layer of the artificial neural network. In particular, a ResNet may be a convolutional neural network comprising one or more skip connections respectively skipping one or more convolutional layers. According to some examples, the ResNets may be represented as m-layer ResNets, where m is the number of layers in the corresponding architecture and, according to some examples, may take values of 34, 50, 101, or 152. According to some examples, such an m-layer ResNet may respectively comprise (m-2)/2 skip connections.

A skip connection may be seen as a bypass which directly feeds the output of one preceding layer over one or more bypassed layers to a layer succeeding the one or more bypassed layers. Instead of having to directly fit a desired mapping, the bypassed layers would then have to fit a residual mapping "balancing" the directly fed output.

Fitting the residual mapping is computationally easier to optimize than the directed mapping. What is more, this alleviates the problem of vanishing/exploding gradients during optimization upon training the machine learning models: if a bypassed layer runs into such problems, its contribution may be skipped by regularization of the directly fed output. Using ResNets thus brings about the advantage that much deeper networks may be trained.

A generative adversarial model (an acronym is GA model) comprises a generative function and a discriminative function, wherein the generative function creates synthetic data, and the discriminative function distinguishes between synthetic and real data. By training the generative function and/or the discriminative function on the one hand the generative function is configured to create synthetic data which is incorrectly classified by the discriminative function as real, on the other hand the discriminative function is configured to distinguish between real data and synthetic data generated by the generative function. In the notion of game theory, a generative adversarial model can be interpreted as a zero-sum game. The training of the generative function and/or of the discriminative function is based, in particular, on the minimization of a cost function.

By using a GA model, based on a set of training data synthetic data can be generated that has the same characteristics as the training data set. The training of the GA model can be based on data not being annotated (unsupervised learning), so that there is low effort in training a GA model.

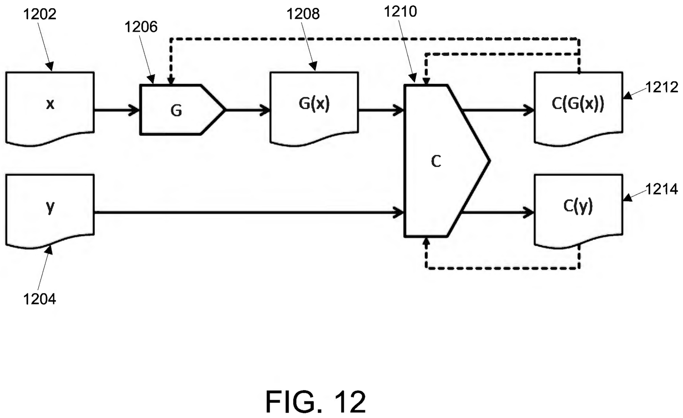

Figure 12 shows a data flow diagram according to an embodiment for using a generative adversarial network for creating synthetic output data G(x) 1208 based on input data x 1202 that is indistinguishable from real output data y 1204, in accordance with one or more embodiments. The synthetic output data G(x) 1208 has the same structure as the real output data y 1204, but its content is not derived from real world data.

The generative adversarial network comprises a generator function G 1206 and a classifier function C 1210 which are trained jointly. The task of the generator function G 1206 is to provide realistic synthetic output data G(x) 1208 based on input data x 1202, and the task of the classifier function C 1210 is to distinguish between real output data y 1204 and synthetic output data G(x) 1208. In particular, the output of the classifier function C 1210 is a real number between 0 and 1 corresponding to the probability of the input value being real data, so that an ideal classifier function would calculate an output value of C(y) 1214 ≈ 1 for real data y 1204 and C(G(x)) 1212 ≈ 0 for synthetic data G(x) 1208.

Within the training process, parameters of the generator function G 1206 are adapted so that the synthetic output data G(x) 1208 has the same characteristics as real output data y 1204, so that the classifier function C 1210 cannot distinguish between real and synthetic data anymore. At the same time, parameters of the classifier function C 1210 are adapted so that it distinguishes between real and synthetic data in the best possible way. Here, the training relies on pairs comprising input data x 1202 and the corresponding real output data y 1204. Within a single training step, the generator function G 1206 is applied to the input data x 1202 for generating synthetic output data G(x) 1208. Furthermore, the classifier function C 1210 is applied to the real output data y 1204 for generating a first classification result C(y) 1214. Additionally, the classifier function C 1210 is applied to the synthetic output data G(x) 1208 for generating a second classification result C(G(x)) 1212.

Adapting the parameters of the generative function G 1206 and the classifier function C 1210 is based on minimizing a cost function by using the backpropagation algorithm, respectively. In this embodiment, the cost function K_{C} for the classifier function C 1210 is K_{C} ∝ - BCE(C(y), 1) - BCE(C(G(x)), 0), wherein BCE denotes the binary cross entropy defined as BCE(z, z') = z' ·log(z) + (1 - z') ·log(1 - z). By using this cost function, both wrongly classifying real output data as synthetic (indicated by C(y) ≈ 0) and wrongly classifying synthetic output data as real (indicated as C(G(x)) 1212 ≈ 1) increases the cost function K_{C} to be minimized. Furthermore, the cost function K_{G} for the generator function G 1206 is K_{G} ∝ - BCE(C(G(x)), 1) = - log (C(G(x)). By using this cost function, correctly classified synthetic output data (indicated as C(G(x)) 1212 ≈ 0) leads to an increase of the cost function K_{G} to be minimized.

In particular, a recurrent machine learning model is a machine learning model whose output does not only depend on the input value and the parameters of the machine learning model adapted by the training process, but also on a hidden state vector, wherein the hidden state vector is based on previous inputs used on for the recurrent machine learning model. In particular, the recurrent machine learning model can comprise additional storage states or additional structures that incorporate time delays or comprise feedback loops.

In particular, the underlying structure of a recurrent machine learning model can be a neural network, which can be denoted as recurrent neural network. Such a recurrent neural network can be described as an artificial neural network where connections between nodes form a directed graph along a temporal sequence. In particular, a recurrent neural network can be interpreted as directed acyclic graph. In particular, the recurrent neural network can be a finite impulse recurrent neural network or an infinite impulse recurrent neural network (wherein a finite impulse network can be unrolled and replaced with a strictly feedforward neural network, and an infinite impulse network cannot be unrolled and replaced with a strictly feedforward neural network).

In particular, training a recurrent neural network can be based on the BPTT algorithm (acronym for "backpropagation through time"), on the RTRL algorithm (acronym for "real-time recurrent learning") and/or on genetic algorithms.

By using a recurrent machine learning model input data comprising sequences of variable length can be used. In particular, this implies that the method cannot be used only for a fixed number of input datasets (and needs to be trained differently for every other number of input datasets used as input), but can be used for an arbitrary number of input datasets. This implies that the whole set of training data, independent of the number of input datasets contained in different sequences, can be used within the training, and that training data is not reduced to training data corresponding to a certain number of successive input datasets.

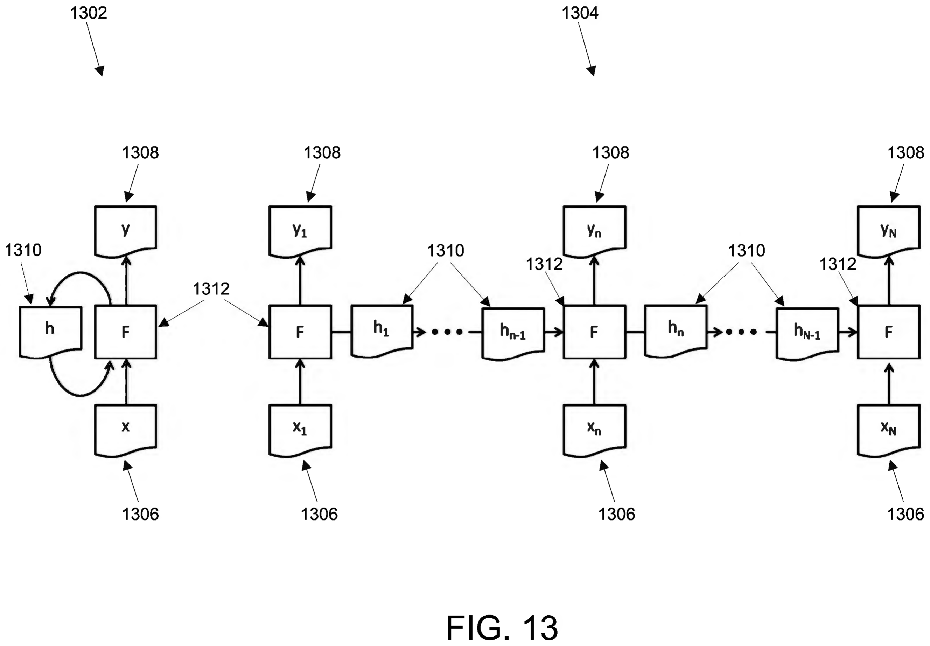

Figure 13 shows the schematic structure of a recurrent machine learning model F, both in a recurrent representation 1302 and in an unfolded representation 1304, that may be used to implement one or more machine learning models described herein. The recurrent machine learning model takes as input several input datasets x, x₁, ..., x_{N} 1306 and creates a corresponding set of output datasets y, y₁, ..., y_{N} 1308. Furthermore, the output depends on a so-called hidden vector h, h₁, ..., h_{N} 1310, which implicitly comprises information about input datasets previously used as input for the recurrent machine learning model F 1312. By using these hidden vectors h, h₁, ..., h_{N} 1310, a sequentiality of the input datasets can be leveraged.

In a single step of the processing, the recurrent machine learning model F 1312 takes as input the hidden vector hₙ₋₁ created within the previous step and an input dataset xₙ. Within this step, the recurrent machine learning model F generates as output an updated hidden vector hₙ and an output dataset yₙ. In other words, one step of processing calculates (yₙ, hₙ) = F(xₙ, hₙ₋₁), or by splitting the recurrent machine learning model F 1312 into a part F(y) calculating the output data and F(h) calculating the hidden vector, one step of processing calculates yₙ = F^{(y)}(xₙ, hₙ₋₁) and hₙ *=* F^{(h)}(xₙ, hₙ₋₁). For the first processing step, h₀ can be chosen randomly or filled with all entries being zero. The parameters of the recurrent machine learning model F 1312 that were trained based on training datasets before do not change between the different processing steps.

In particular, the output data and the hidden vector of a processing step depend on all the previous input datasets used in the previous steps. yₙ = F^{(y)}(xₙ, F^{(h)}(xₙ₋₁, hₙ₋₂)) and hₙ *=* F(h)(xₙ, F^{(h)}(xₙ₋₁, hₙ₋₂)).

Systems, apparatuses, and methods described herein may be implemented using digital circuitry, or using one or more computers using well-known computer processors, memory units, storage devices, computer software, and other components. Typically, a computer includes a processor for executing instructions and one or more memories for storing instructions and data. A computer may also include, or be coupled to, one or more mass storage devices, such as one or more magnetic disks, internal hard disks and removable disks, magneto-optical disks, optical disks, etc.

Systems, apparatuses, and methods described herein may be implemented using computers operating in a client-server relationship. Typically, in such a system, the client computers are located remotely from the server computer and interact via a network. The client-server relationship may be defined and controlled by computer programs running on the respective client and server computers.

Systems, apparatuses, and methods described herein may be implemented within a network-based cloud computing system. In such a network-based cloud computing system, a server or another processor that is connected to a network communicates with one or more client computers via a network. A client computer may communicate with the server via a network browser application residing and operating on the client computer, for example. A client computer may store data on the server and access the data via the network. A client computer may transmit requests for data, or requests for online services, to the server via the network. The server may perform requested services and provide data to the client computer(s). The server may also transmit data adapted to cause a client computer to perform a specified function, e.g., to perform a calculation, to display specified data on a screen, etc. For example, the server may transmit a request adapted to cause a client computer to perform one or more of the steps or functions of the methods and workflows described herein, including one or more of the steps or functions of Figures 1-6. Certain steps or functions of the methods and workflows described herein, including one or more of the steps or functions of Figures 1-6, may be performed by a server or by another processor in a network-based cloud-computing system. Certain steps or functions of the methods and workflows described herein, including one or more of the steps of Figures 1-6, may be performed by a client computer in a network-based cloud computing system. The steps or functions of the methods and workflows described herein, including one or more of the steps of Figures 1-6, may be performed by a server and/or by a client computer in a network-based cloud computing system, in any combination.

Systems, apparatuses, and methods described herein may be implemented using a computer program product tangibly embodied in an information carrier, e.g., in a non-transitory machine-readable storage device, for execution by a programmable processor; and the method and workflow steps described herein, including one or more of the steps or functions of Figures 1-6, may be implemented using one or more computer programs that are executable by such a processor. A computer program is a set of computer program instructions that can be used, directly or indirectly, in a computer to perform a certain activity or bring about a certain result. A computer program can be written in any form of programming language, including compiled or interpreted languages, and it can be deployed in any form, including as a stand-alone program or as a module, component, subroutine, or other unit suitable for use in a computing environment.

A high-level block diagram of an example computer 1402 that may be used to implement systems, apparatuses, and methods described herein is depicted in Figure 14. Computer 1402 includes a processor 1404 operatively coupled to a data storage device 1412 and a memory 1410. Processor 1404 controls the overall operation of computer 1402 by executing computer program instructions that define such operations. The computer program instructions may be stored in data storage device 1412, or other computer readable medium, and loaded into memory 1410 when execution of the computer program instructions is desired. Thus, the method and workflow steps or functions of Figures 1-6 can be defined by the computer program instructions stored in memory 1410 and/or data storage device 1412 and controlled by processor 1404 executing the computer program instructions. For example, the computer program instructions can be implemented as computer executable code programmed by one skilled in the art to perform the method and workflow steps or functions of Figures 1-6. Accordingly, by executing the computer program instructions, the processor 1404 executes the method and workflow steps or functions of Figures 1-6. Computer 1402 may also include one or more network interfaces 1406 for communicating with other devices via a network. Computer 1402 may also include one or more input/output devices 1408 that enable user interaction with computer 1402 (e.g., display, keyboard, mouse, speakers, buttons, etc.).

Processor 1404 may include both general and special purpose microprocessors, and may be the sole processor or one of multiple processors of computer 1402. Processor 1404 may include one or more central processing units (CPUs), for example. Processor 1404, data storage device 1412, and/or memory 1410 may include, be supplemented by, or incorporated in, one or more application-specific integrated circuits (ASICs) and/or one or more field programmable gate arrays (FPGAs).

Data storage device 1412 and memory 1410 each include a tangible non-transitory computer readable storage medium. Data storage device 1412, and memory 1410, may each include high-speed random access memory, such as dynamic random access memory (DRAM), static random access memory (SRAM), double data rate synchronous dynamic random access memory (DDR RAM), or other random access solid state memory devices, and may include non-volatile memory, such as one or more magnetic disk storage devices such as internal hard disks and removable disks, magneto-optical disk storage devices, optical disk storage devices, flash memory devices, semiconductor memory devices, such as erasable programmable read-only memory (EPROM), electrically erasable programmable read-only memory (EEPROM), compact disc read-only memory (CD-ROM), digital versatile disc read-only memory (DVD-ROM) disks, or other non-volatile solid state storage devices.

Input/output devices 1408 may include peripherals, such as a printer, scanner, display screen, etc. For example, input/output devices 1408 may include a display device such as a cathode ray tube (CRT) or liquid crystal display (LCD) monitor for displaying information to the user, a keyboard, and a pointing device such as a mouse or a trackball by which the user can provide input to computer 1402.

An image acquisition device 1414 can be connected to the computer 1402 to input image data (e.g., medical images) to the computer 1402. It is possible to implement the image acquisition device 1414 and the computer 1402 as one device. It is also possible that the image acquisition device 1414 and the computer 1402 communicate wirelessly through a network. In a possible embodiment, the computer 1402 can be located remotely with respect to the image acquisition device 1414.

Any or all of the systems, apparatuses, and methods discussed herein may be implemented using one or more computers such as computer 1402.

One skilled in the art will recognize that an implementation of an actual computer or computer system may have other structures and may contain other components as well, and that Figure 14 is a high level representation of some of the components of such a computer for illustrative purposes.

Independent of the grammatical term usage, individuals with male, female or other gender identities are included within the term.

The foregoing Detailed Description is to be understood as being in every respect illustrative and exemplary, but not restrictive, and the scope of the invention disclosed herein is not to be determined from the Detailed Description, but rather from the claims as interpreted according to the full breadth permitted by the patent laws. It is to be understood that the embodiments shown and described herein are only illustrative of the principles of the present invention and that various modifications may be implemented by those skilled in the art without departing from the scope of the invention. Those skilled in the art could implement various other feature combinations without departing from the scope of the invention.

The following is a list of non-limiting illustrative embodiments disclosed herein:

Illustrative embodiment 1. A computer-implemented method comprising: receiving 1) one or more input medical images each in a domain and 2) a domain code for each of the one or more input medical images identifying its domain; downsampling each particular input medical image of the one or more input medical images using a dynamic convolutional layer based on the domain code for the particular input medical image; extracting a first set of features from each particular downsampled input medical image of the one or more downsampled input medical images using the dynamic convolutional layer based on the domain code for the particular downsampled input medical image; encoding the first set of features into a second set of features using a machine learning based encoder; performing a medical imaging analysis task based on the second set of features using a machine learning based decoder; and outputting results of the medical imaging analysis task.

Illustrative embodiment 2. The computer-implemented method of illustrative embodiment 1, wherein downsampling each particular input medical image of the one or more input medical images using a dynamic convolutional layer based on the domain code for the particular input medical image comprises: for each respective one of the domain codes, determining one or more weights based on the respective domain code; updating one or more parameters of the dynamic convolutional layer based on the one or more weights; and downsampling the particular input medical image using the dynamic convolutional layer with the one or more updated parameters.

Illustrative embodiment 3. The computer-implemented method of any one of illustrative embodiments 1-2, wherein the machine learning based encoder comprises a plurality of encoding levels, each of the plurality of encoding levels comprising a self-attention layer for extracting global features and a further dynamic convolutional layer for extracting local features.

Illustrative embodiment 4. The computer-implemented method of illustrative embodiment 3, wherein encoding the first set of features into a second set of features using a machine learning based encoder comprises: extracting features at each of the plurality of encoding levels, the extracted features at the plurality of encoding levels forming the second set of features.

Illustrative embodiment 5. The computer-implemented method of illustrative embodiment 4, wherein performing a medical imaging analysis task based on the second set of features using a machine learning based decoder comprises: for each respective encoding level of the plurality of encoding levels: splitting the second set of features for the respective encoding level into domain-specific sequences, decoding each of the domain-specific sequences using a domain-specific self-attention layer to generate decoded features, for each particular position of a plurality of positions in the one or more input medical images, determining a mean of the decoded features corresponding to the particular position, and aggregating the mean of the decoded features; and combining the aggregated mean of the decoded features for the plurality of encoding levels using the machine learning based decoder.

Illustrative embodiment 6. The computer-implemented method of any one of illustrative embodiments 1-5, wherein the dynamic convolutional layer and the machine learning based encoder are trained by: pretraining the dynamic convolutional layer and the machine learning based encoder for performing an image reconstruction task; and fine-tuning the pretrained dynamic convolutional layer and the pretrained machine learning based encoder for performing the medical imaging analysis task.

Illustrative embodiment 7. The computer-implemented method of illustrative embodiment 6, wherein pretraining the dynamic convolutional layer and the machine learning based encoder for performing an image reconstruction task comprises: receiving 1) one or more masked training medical images each in a domain and 2) a domain code for each of the one or more masked training medical images identifying its domain, the one or more masked training medical images generated by masking one or more training medical images; downsampling each particular masked training medical image of the one or more masked training medical images using the dynamic convolutional layer based on the domain code for the particular masked training medical image; extracting a third set of features from each particular downsampled masked training medical image of the one or more downsampled masked training medical images using the dynamic convolutional layer based on the domain code for the particular downsampled masked training medical image; encoding the third set of features into a fourth set of features using a machine learning based encoder; inserting tokens representing the masked patches of the one or more training medical images into the fourth set of features; reconstructing the one or more training medical images based on the fourth set of features with the inserted tokens using another machine learning based decoder; training the dynamic convolutional layer and the machine learning based encoder based on the one or more training medical images and the one or more reconstructed training medical images; and outputting the trained dynamic convolutional layer and the trained machine learning based encoder.

Illustrative embodiment 8. The computer-implemented method of illustrative embodiment 7, wherein fine-tuning the pretrained dynamic convolutional layer and the pretrained machine learning based encoder for performing the medical imaging analysis task comprises: downsampling each particular training medical image of the one or more training medical images using the trained dynamic convolutional layer based on the domain code for the particular training medical image; extracting a fifth set of features from each particular downsampled training medical image of the one or more downsampled training medical images using the trained dynamic convolutional layer based on the domain code for the particular downsampled masked training medical image; encoding the fifth set of features into a sixth set of features using the trained machine learning based encoder; performing a medical imaging analysis task based on the sixth set of features using the machine learning based decoder; fine-tuning the trained dynamic convolutional layer, the trained machine learning based encoder, and the machine learning based decoder based on results of the medical imaging analysis task and ground truth results of the medical imaging analysis task; and outputting the fine-tuned dynamic convolutional layer, the fine-tuned machine learning based encoder, and the fine-tuned machine learning based decoder.

Illustrative embodiment 9. The computer-implemented method of any one of illustrative embodiments 1-8, wherein the one or more input medical images comprises an MRI (magnetic resonance imaging) sequence of a brain of a patient.

Illustrative embodiment 10. An apparatus comprising: means for receiving 1) one or more input medical images each in a domain and 2) a domain code for each of the one or more input medical images identifying its domain; means for downsampling each particular input medical image of the one or more input medical images using a dynamic convolutional layer based on the domain code for the particular input medical image; means for extracting a first set of features from each particular downsampled input medical image of the one or more downsampled input medical images using the dynamic convolutional layer based on the domain code for the particular downsampled input medical image; means for encoding the first set of features into a second set of features using a machine learning based encoder; means for performing a medical imaging analysis task based on the second set of features using a machine learning based decoder; and means for outputting results of the medical imaging analysis task.

Illustrative embodiment 11. The apparatus of illustrative embodiment 10, wherein the means for downsampling each particular input medical image of the one or more input medical images using a dynamic convolutional layer based on the domain code for the particular input medical image comprises: for each respective one of the domain codes, means for determining one or more weights based on the respective domain code; means for updating one or more parameters of the dynamic convolutional layer based on the one or more weights; and means for downsampling the particular input medical image using the dynamic convolutional layer with the one or more updated parameters.

Illustrative embodiment 12. The apparatus of any one of illustrative embodiments 10-11, wherein the machine learning based encoder comprises a plurality of encoding levels, each of the plurality of encoding levels comprising a self-attention layer for extracting global features and a further dynamic convolutional layer for extracting local features.

Illustrative embodiment 13. The apparatus of illustrative embodiment 12, wherein the means for encoding the first set of features into a second set of features using a machine learning based encoder comprises: means for extracting features at each of the plurality of encoding levels, the extracted features at the plurality of encoding levels forming the second set of features.

Illustrative embodiment 14. The apparatus of illustrative embodiment 13, wherein the means for performing a medical imaging analysis task based on the second set of features using a machine learning based decoder comprises: for each respective encoding level of the plurality of encoding levels: means for splitting the second set of features for the respective encoding level into domain-specific sequences, means for decoding each of the domain-specific sequences using a domain-specific self-attention layer to generate decoded features, for each particular position of a plurality of positions in the one or more input medical images, means for determining a mean of the decoded features corresponding to the particular position, and means for aggregating the mean of the decoded features; and means for combining the aggregated mean of the decoded features for the plurality of encoding levels using the machine learning based decoder.

Illustrative embodiment 15. A non-transitory computer-readable storage medium comprising instructions which, when executed by a computer, cause the computer to carry out operations comprising: receiving 1) one or more input medical images each in a domain and 2) a domain code for each of the one or more input medical images identifying its domain; downsampling each particular input medical image of the one or more input medical images using a dynamic convolutional layer based on the domain code for the particular input medical image; extracting a first set of features from each particular downsampled input medical image of the one or more downsampled input medical images using the dynamic convolutional layer based on the domain code for the particular downsampled input medical image; encoding the first set of features into a second set of features using a machine learning based encoder; performing a medical imaging analysis task based on the second set of features using a machine learning based decoder; and outputting results of the medical imaging analysis task.

Illustrative embodiment 16. The non-transitory computer-readable storage medium of illustrative embodiment 15, wherein downsampling each particular input medical image of the one or more input medical images using a dynamic convolutional layer based on the domain code for the particular input medical image comprises: for each respective one of the domain codes, determining one or more weights based on the respective domain code; updating one or more parameters of the dynamic convolutional layer based on the one or more weights; and downsampling the particular input medical image using the dynamic convolutional layer with the one or more updated parameters.

Illustrative embodiment 17. The non-transitory computer-readable storage medium of any one of illustrative embodiments 15-16, wherein the dynamic convolutional layer and the machine learning based encoder are trained by: pretraining the dynamic convolutional layer and the machine learning based encoder for performing an image reconstruction task; and fine-tuning the pretrained dynamic convolutional layer and the pretrained machine learning based encoder for performing the medical imaging analysis task.

Illustrative embodiment 18. The non-transitory computer-readable storage medium of illustrative embodiment 17, wherein pretraining the dynamic convolutional layer and the machine learning based encoder for performing an image reconstruction task comprises: receiving 1) one or more masked training medical images each in a domain and 2) a domain code for each of the one or more masked training medical images identifying its domain, the one or more masked training medical images generated by masking one or more training medical images; downsampling each particular masked training medical image of the one or more masked training medical images using the dynamic convolutional layer based on the domain code for the particular masked training medical image; extracting a third set of features from each particular downsampled masked training medical image of the one or more downsampled masked training medical images using the dynamic convolutional layer based on the domain code for the particular downsampled masked training medical image; encoding the third set of features into a fourth set of features using a machine learning based encoder; inserting tokens representing the masked patches of the one or more training medical images into the fourth set of features; reconstructing the one or more training medical images based on the fourth set of features with the inserted tokens using another machine learning based decoder; training the dynamic convolutional layer and the machine learning based encoder based on the one or more training medical images and the one or more reconstructed training medical images; and outputting the trained dynamic convolutional layer and the trained machine learning based encoder.

Illustrative embodiment 19. The non-transitory computer-readable storage medium of illustrative embodiment 18, wherein fine-tuning the pretrained dynamic convolutional layer and the pretrained machine learning based encoder for performing the medical imaging analysis task comprises: downsampling each particular training medical image of the one or more training medical images using the trained dynamic convolutional layer based on the domain code for the particular training medical image; extracting a fifth set of features from each particular downsampled training medical image of the one or more downsampled training medical images using the trained dynamic convolutional layer based on the domain code for the particular downsampled masked training medical image; encoding the fifth set of features into a sixth set of features using the trained machine learning based encoder; performing a medical imaging analysis task based on the sixth set of features using the machine learning based decoder; fine-tuning the trained dynamic convolutional layer, the trained machine learning based encoder, and the machine learning based decoder based on results of the medical imaging analysis task and ground truth results of the medical imaging analysis task; and outputting the fine-tuned dynamic convolutional layer, the fine-tuned machine learning based encoder, and the fine-tuned machine learning based decoder.

Illustrative embodiment 20. The non-transitory computer-readable storage medium of any one of illustrative embodiments 15-19, wherein the one or more input medical images comprises an MRI (magnetic resonance imaging) sequence of a brain of a patient.

## Claims

1. A computer-implemented method comprising:
receiving (102) 1) one or more input medical images (202) each in a domain and 2) a domain code (204) for each of the one or more input medical images identifying its domain;
downsampling (104) each particular input medical image of the one or more input medical images using a dynamic convolutional layer (208) based on the domain code for the particular input medical image;
extracting (106) a first set of features (214) from each particular downsampled input medical image of the one or more downsampled input medical images (210) using the dynamic convolutional layer (212) based on the domain code for the particular downsampled input medical image;
encoding (108) the first set of features into a second set of features using a machine learning based encoder (216, 300);
performing (110) a medical imaging analysis task based on the second set of features using a machine learning based decoder (220); and
outputting (112) results (222) of the medical imaging analysis task.

2. The computer-implemented method of claim 1, wherein downsampling each particular input medical image of the one or more input medical images using a dynamic convolutional layer based on the domain code for the particular input medical image comprises:
for each respective one of the domain codes, determining one or more weights based on the respective domain code;
updating one or more parameters of the dynamic convolutional layer based on the one or more weights; and
downsampling the particular input medical image using the dynamic convolutional layer with the one or more updated parameters.

3. The computer-implemented method of any one of claims 1 - 2, wherein the machine learning based encoder comprises a plurality of encoding levels (308), each of the plurality of encoding levels comprising a self-attention layer (302) for extracting global features and a further dynamic convolutional layer (304) for extracting local features.

4. The computer-implemented method of claim 3, wherein encoding the first set of features into a second set of features using a machine learning based encoder comprises:
extracting features (310) at each of the plurality of encoding levels, the extracted features at the plurality of encoding levels forming the second set of features.

5. The computer-implemented method of claim 4, wherein performing a medical imaging analysis task based on the second set of features using a machine learning based decoder comprises:
for each respective encoding level of the plurality of encoding levels:
splitting the second set of features for the respective encoding level into domain-specific sequences,
decoding each of the domain-specific sequences using a domain-specific self-attention layer (218) to generate decoded features,
for each particular position of a plurality of positions in the one or more input medical images, determining a mean of the decoded features corresponding to the particular position, and
aggregating the mean of the decoded features; and
combining the aggregated mean of the decoded features for the plurality of encoding levels using the machine learning based decoder.

6. The computer-implemented method of any one of claims 1 - 5, wherein the dynamic convolutional layer and the machine learning based encoder are trained by:
pretraining (602) the dynamic convolutional layer and the machine learning based encoder for performing an image reconstruction task; and
fine-tuning (604) the pretrained dynamic convolutional layer and the pretrained machine learning based encoder for performing the medical imaging analysis task.

7. The computer-implemented method of claim 6, wherein pretraining the dynamic convolutional layer and the machine learning based encoder for performing an image reconstruction task comprises:
receiving (402) 1) one or more masked training medical images (606) each in a domain and 2) a domain code (308) for each of the one or more masked training medical images identifying its domain, the one or more masked training medical images generated by masking one or more training medical images;
downsampling (404) each particular masked training medical image of the one or more masked training medical images using the dynamic convolutional layer (612) based on the domain code for the particular masked training medical image;
extracting (406) a third set of features (618) from each particular downsampled masked training medical image of the one or more downsampled masked training medical images (614) using the dynamic convolutional layer (616) based on the domain code for the particular downsampled masked training medical image;
encoding (408) the third set of features into a fourth set of features (622) using a machine learning based encoder (620);
inserting (410) tokens representing the masked patches of the one or more training medical images into the fourth set of features;
reconstructing (412) the one or more training medical images based on the fourth set of features with the inserted tokens using another machine learning based decoder (626);
training (414) the dynamic convolutional layer and the machine learning based encoder based on the one or more training medical images and the one or more reconstructed training medical images; and
outputting (416) the trained dynamic convolutional layer and the trained machine learning based encoder.

8. The computer-implemented method of claim 7, wherein fine-tuning the pretrained dynamic convolutional layer and the pretrained machine learning based encoder for performing the medical imaging analysis task comprises:
downsampling (504) each particular training medical image of the one or more training medical images (630) using the trained dynamic convolutional layer (636) based on the domain code (632) for the particular training medical image;
extracting (506) a fifth set of features (642) from each particular downsampled training medical image of the one or more downsampled training medical images (638) using the trained dynamic convolutional layer (640) based on the domain code for the particular downsampled masked training medical image;
encoding (508) the fifth set of features into a sixth set of features using the trained machine learning based encoder (644);
performing (510) a medical imaging analysis task based on the sixth set of features using the machine learning based decoder (648);
fine-tuning (512) the trained dynamic convolutional layer, the trained machine learning based encoder, and the machine learning based decoder based on results (650) of the medical imaging analysis task and ground truth results of the medical imaging analysis task; and
outputting (514) the fine-tuned dynamic convolutional layer, the fine-tuned machine learning based encoder, and the fine-tuned machine learning based decoder.

9. The computer-implemented method of any one of claims 1 - 8, wherein the one or more input medical images comprises an magnetic resonance imaging, MRI, sequence of a brain of a patient.

10. An apparatus comprising:
means for receiving (102) 1) one or more input medical images (202) each in a domain and 2) a domain code (204) for each of the one or more input medical images identifying its domain;
means for downsampling (104) each particular input medical image of the one or more input medical images using a dynamic convolutional layer (208) based on the domain code for the particular input medical image;
means for extracting (106) a first set of features (214) from each particular downsampled input medical image of the one or more downsampled input medical images (210) using the dynamic convolutional layer (212) based on the domain code for the particular downsampled input medical image;
means for encoding (108) the first set of features into a second set of features using a machine learning based encoder (216, 300);
means for performing (110) a medical imaging analysis task based on the second set of features using a machine learning based decoder (220); and
means for outputting (112) results (222) of the medical imaging analysis task.

11. The apparatus of claim 10, wherein the means for downsampling each particular input medical image of the one or more input medical images using a dynamic convolutional layer based on the domain code for the particular input medical image comprises:
for each respective one of the domain codes, means for determining one or more weights based on the respective domain code;
means for updating one or more parameters of the dynamic convolutional layer based on the one or more weights; and
means for downsampling the particular input medical image using the dynamic convolutional layer with the one or more updated parameters.

12. The apparatus of any one of claims 10 - 11, wherein the machine learning based encoder comprises a plurality of encoding levels (308), each of the plurality of encoding levels comprising a self-attention layer (302) for extracting global features and a further dynamic convolutional layer (304) for extracting local features.

13. The apparatus of claim 12, wherein the means for encoding the first set of features into a second set of features using a machine learning based encoder comprises:
means for extracting features (310) at each of the plurality of encoding levels, the extracted features at the plurality of encoding levels forming the second set of features.

14. The apparatus of claim 13, wherein the means for performing a medical imaging analysis task based on the second set of features using a machine learning based decoder comprises:
for each respective encoding level of the plurality of encoding levels:
means for splitting the second set of features for the respective encoding level into domain-specific sequences,
means for decoding each of the domain-specific sequences using a domain-specific self-attention layer (218) to generate decoded features,
for each particular position of a plurality of positions in the one or more input medical images, means for determining a mean of the decoded features corresponding to the particular position, and
means for aggregating the mean of the decoded features; and
means for combining the aggregated mean of the decoded features for the plurality of encoding levels using the machine learning based decoder.

15. A non-transitory computer-readable storage medium comprising instructions which, when executed by a computer, cause the computer to carry out operations implementing the method of any one of claims 1 - 9.
